# EUROPÄISCHE PATENTANMELDUNG

(11) **EP 3 770 561 A1**
(43) Veröffentlichungstag der Anmeldung: **27.01.2021**
(21) Anmeldenummer: 20185569.9
(22) Anmeldetag: 13.07.2020
(51) Int. Cl.: G01F 1/66, G01N 29/024, G01F 25/00, G01F 15/00

(54) **ULTRASCHALL-MESSVORRICHTUNG ZUR MESSUNG AN EINEM STRÖMENDEN FLUID UND ULTRASCHALL-MESSSYSTEM**

(30) Priorität: 26.07.2019 EP 19188626
(71) Anmelder: Levitronix GmbH, 8005 Zürich (CH)
(72) Erfinder: WELSCH, Guido, 8932 Mettmenstetten (CH); BOBER, Maciej, 86919 Utting am Ammersee (DE); WEBER, Jonathan, 8610 Uster (CH)
(74) Vertreter: Intellectual Property Services GmbH

(57) **Zusammenfassung**

Es wird eine Ultraschall-Messvorrichtung vorgeschlagen zur Messung an einem strömenden Fluid, mit einer Messröhre (2), welche eine Mittelachse (M) aufweist, die eine Strömungsrichtung (A) für das Fluid festlegt, mit einer ersten Kammer (3), in welcher ein erster Ultraschallwandler (5) angeordnet ist, und mit einer zweiten Kammer (4), in welcher ein zweiter Ultraschallwandler (6) angeordnet ist, wobei die Messröhre (2) einen Einlass (22) und einen Auslass (23) für das Fluid aufweist, wobei der erste Ultraschallwandler (5) und der zweite Ultraschallwandler (6) eine geradlinige Messstrecke (7) für das Fluid begrenzen, wobei die erste Kammer (3) und die zweite Kammer (4) so ausgestaltet und angeordnet sind, dass sie jeweils von dem Fluid umströmbar sind, und wobei der erste Ultraschallwandler (5) und der zweite Ultraschallwandler (6) so angeordnet sind, dass sich die Messstrecke (7) in der Strömungsrichtung (A) erstreckt. Durch die Erfindung wird ferner ein Verfahren zur Herstellung einer solchen Ultraschall-Messvorrichtung vorgeschlagen

## Beschreibung

Die Erfindung betrifft eine Ultraschall-Messvorrichtung zur Messung an einem strömenden Fluid sowie ein Ultraschall-Messsystem gemäss dem Oberbegriff des unabhängigen Anspruchs der jeweiligen Kategorie.

Ultraschall-Messvorrichtungen zur Messung an einem strömenden Fluid werden beispielsweise eingesetzt, um den Durchfluss des Fluids durch eine Leitung, beispielsweise einen flexiblen oder einen harten Kunststoffschlauch zu bestimmen. Insbesondere bei flexiblen Schläuchen ist es eine bekannte Massnahme, die Messvorrichtung als Klemmvorrichtung auszugestalten, derart, dass sie auf eine flexible Leitung aufgeklemmt werden kann, bzw. dass die Leitung von der Messvorrichtung eingeklemmt wird. Die Leitung mit dem darin strömenden Fluid wird dann mit Ultraschallsignalen beaufschlagt. Nach Durchlaufen der Leitung und des Fluids werden die Ultraschallsignale von einem Ultraschallwandler empfangen und das empfangene Signal ausgewertet.

Ferner gibt es Ultraschall-Messvorrichtungen, die von dem Fluid durchströmt werden. Derartige Messvorrichtungen haben eine Messröhre mit einem Einlass für das Fluid und mit einem Auslass für das Fluid. In der Messvorrichtung wird dann das strömende Fluid mit Ultraschallsignalen beaufschlagt.

Beide Arten von Messvorrichtungen haben den Vorteil, dass sie eine nicht invasive Methode der Messung an einem strömenden Fluid ermöglichen. Diese nicht invasive Methode wird insbesondere bei solchen hochreinen oder sehr empfindlichen Fluiden verwendet, bei denen ein Kontakt zwischen dem Fluid und der Messvorrichtung vermieden werden soll, beispielsweise, damit das Fluid nicht kontaminiert wird. Als Beispiele seien hier die Pharmaindustrie und die biotechnologische Industrie genannt. Hier werden häufig Lösungen und Suspensionen hergestellt und gefördert, die eine sehr hohe Anforderung an die Reinheit und/oder an die Unversehrtheit des Fluids stellen. Häufig müssen derartige Fluide sogar unter sterilen Bedingungen behandelt werden. Aber auch bei der Messung an chemisch aggressiven Fluiden, beispielsweise an Säuren, werden bevorzugt diese nicht invasiven Methoden eingesetzt, beispielsweise in der Halbleiterindustrie.

Insbesondere für Messungen an sehr empfindliche oder sehr aggressiven Substanzen stellt die Reinigung bzw. das Sterilisieren der Messvorrichtung einen sehr grossen Zeit- Material- und Kostenaufwand dar. Daher besteht das Bedürfnis, die mit den Substanzen in Kontakt kommenden Komponenten als Einmal (single-use) -teile für den Einmalgebrauch auszugestalten. Bei der Ausgestaltung für den Einmalgebrauch werden vorzugsweise diejenigen Komponenten, welche mit den zu behandelnden Fluiden in Kontakt kommen, nur genau einmal verwendet und dann bei der nächsten Anwendung durch neue, das heisst ungebrauchte, Einmalteile ersetzt. Bei der Herstellung bzw. der Konzipierung von Einmalteilen ist es ein wichtiges Kriterium, dass diese in möglichst einfacher Weise mit den anderen Komponenten der Messvorrichtung zusammengesetzt werden können. Es ist wünschenswert, dass dieses Zusammensetzen und natürlich auch das Trennen mit möglichst geringem Aufwand, mit wenigen Handgriffen, rasch und vorzugsweise ohne Werkzeug erfolgen kann.

Ultraschall-Messvorrichtungen, die insbesondere für die nicht invasive Messung an hochreinen oder aggressiven Substanzen geeignet sind, werden von der Anmelderin sowohl als Klemmvorrichtungen als auch als durchströmbare Messvorrichtungen mit einer Messröhre unter dem Handelsnamen LEVIFLOW angeboten und vertrieben. Beide Ausführungsformen arbeiten grundsätzlich nach dem gleichen Prinzip. Es sind jeweils mindestens zwei Ultraschallwandler vorgesehen, von denen jeder ein Ultraschallsignal aussenden und empfangen kann.

Die Ultraschallwandler sind so angeordnet und ausgerichtet, dass der eine Ultraschallwandler ein Signal aussendet, das schräg mit der Strömungsrichtung oder in Strömungsrichtung ausgerichtet ist, während der andere Ultraschallwandler ein Signal aussendet, das schräg gegen die Strömungsrichtung oder entgegen der Strömungsrichtung ausgerichtet ist. Dann wird mit dem ersten Ultraschallwandler ein Messsignal ausgesendet, das von dem zweiten Ultraschallwandler empfangen wird. Anschliessend wird von dem zweiten Ultraschallwandler ein Messsignal ausgesendet, das von dem ersten Ultraschallwandler empfangen wird.

Das schräg in oder in Strömungsrichtung ausgesendete Messsignal wird in der Strömung beschleunigt und das schräg gegen oder entgegen die Strömungsrichtung ausgesendete Messsignal wird durch die Strömung abgebremst. Die Laufzeitdifferenz der beiden Messsignale ist proportional zur Strömungsgeschwindigkeit des Fluids, sodass sich aus dieser Laufzeitdifferenz der Durchfluss durch die Leitung ermitteln lässt.

Beide Ausführungsformen haben ihre Vor- und Nachteile. Bei den Vorrichtungen, die als Klemmvorrichtung ausgestaltet sind, ist der erste Ultraschallwandler auf der einen Seite der eingeklemmten Leitung angeordnet und der zweite Ultraschallwandler auf der anderen Seite der Leitung. Die beiden Ultraschallwandler sind bezüglich der Strömungsrichtung des Fluids zueinander versetzt angeordnet und dabei so ausgerichtet, dass der erste Ultraschallwandler ein von dem zweiten Ultraschallwandler gesendets Signal empfangen kann, und der zweite Ultraschallwandler ein von dem ersten Ultraschallwandler gesendetes Signal empfangen kann. Durch den Versatz zueinander sind dabei die beiden Ultraschallwandler so ausgerichtet, dass sie ihre Ultraschallsignale jeweils schräg zur Strömungsrichtung des Fluids aussenden, wobei der eine Ultraschallwandler das Signal schräg mit der Strömungsrichtung aussendet, während der andere Ultraschallwandler das Signal schräg gegen die Strömungsrichtung aussendet.

Diese Ausführungsform hat den Vorteil, dass die Strömung des Fluids in der Leitung praktisch nicht beeinflusst wird. Die Leitung ist geradlinig. Die Strömung ist im Wesentlichen frei von Turbulenzen und Kavitation und es gibt auch keine Ecken oder Randgebiete, in denen es zur Stagnation des Fluids, zur Koagulation oder zu sonstigen Ablagerungen kommen kann. Zudem können solche Klemmvorrichtungen sehr kompakt und platzsparend ausgestaltet werden. Ein Nachteil dieser Ausführungsform besteht darin, dass die Ultraschallsignale schräg zur Strömungsrichtung in das Fluid eingebracht werden müssen. Der Winkel, unter welchem sich das Ultraschallsignal nach Durchdringen der Leitungswand in dem Fluid ausbreitet, hängt von den Eigenschaften des Fluids ab, was zu Problemen bei der Detektion des Ultraschallsignals führen kann. Zudem ist die Messstrecke bei dieser Ausführungsform relativ kurz, woraus eine niedrigere Zeitauflösung resultiert.

Bei den Ausführungsformen, bei welchen die Messvorrichtung eine Messröhre aufweist, die von dem Fluid durchströmt wird, hat die Messröhre üblicherweise eine U-förmige oder eine Z-förmige Ausgestaltung. Es ist eine Einlassröhre vorgesehen, die rechtwinklig zu einem Mittelteil angeordnet ist, und eine Auslassröhre, welche ebenfalls rechtwinklig zu dem Mittelteil angeordnet ist. Falls die Einlassröhre auf der gleichen Seite angeordnet ist wie die Auslassröhre, ergibt sich eine U-förmige Ausgestaltung der Messröhre. Falls die Einlassröhre auf der gegenüberliegenden Seite wie die Auslassröhre angeordnet ist, ergibt sich eine Z-förmige Ausgestaltung der Messröhre. Die beiden Ultraschallwandler werden dann ausserhalb der Messröhre angeordnet, wobei der eine Ultraschallwandler an dem einen Ende des Mittelteils der Messröhre angeordnet ist, und der andere Ultraschallwandler an dem anderen Ende des Mittelteils. Als Messstrecke dient also der Mittelteil der Messröhre.

Diese Ausführungsform hat den Vorteil, dass beide Ultraschallwandler genau rechtwinklig zur Messstrecke angeordnet werden können. Somit können die Ultraschallsignale jeweils genau in Strömungsrichtung oder genau entgegen der Strömungsrichtung des Fluids in die Messröhre eingebracht werden. Hierdurch lässt sich gewährleisten, dass der Winkel, unter welchem sich das Ultraschallsignal in der Messröhre ausbreitet, unabhängig ist von den akustischen Eigenschaften des Fluid. Ferner hat diese Ausführungsform den Vorteil, dass die Messstrecke deutlich länger ausgestaltet werden kann als bei den Klemmvorrichtungen. Eine längere Messstrecke hat den Vorteil, dass sich die Zeitauflösung der Messung erhöht.

Ein Nachteil dieser Ausführungsform besteht darin, dass das Fluid beim Durchlaufen der Messröhre zweimal um 90° umgelenkt wird, nämlich beim Übergang von der Einlassröhre in den Mittelteil und beim Übergang vom Mittelteil in die Auslassröhre. Diese zweimalige Umlenkung verursacht Turbulenzen und Kavitationen im Fluid sowie Stagnationen oder auch Ablagerungen des Fluids, insbesondere in den kritischen Eckbereichen der Messröhre. Bei biologischen Fluiden kann es zudem zu Gerinnungen oder Koagulationen kommen. Diese Effekte vermindern insbesondere die Genauigkeit und die Zuverlässigkeit der Messung. Ein weiterer Nachteil dieser Ausführungsform ist ihr Platzbedarf. Die zweimalige Abknickung der Messröhre erfordert deutlich mehr Platz für die Messvorrichtung.

Obwohl sich beide Ausführungsformen der Ultraschall-Messvorrichtungen in der Praxis sehr gut bewährt haben, gibt es im Hinblick auf immer höhere Anforderungen, beispielsweise an die Messgenauigkeit oder an die Flexibilität der Messvorrichtung, noch Verbesserungspotential.

Ausgehend von diesem Stand der Technik ist es daher eine Aufgabe der Erfindung, eine Ultraschall-Messvorrichtung zur Messung an einem strömenden Fluid vorzuschlagen, welche eine sehr genaue Ermittlung des Durchflusses ermöglicht. Insbesondere soll die Vorrichtung ein effizientes Einbringen des Ultraschallsignals in das Fluid ermöglichen, wobei gleichzeitig Turbulenzen und Stagnationen in dem Fluid deutlich reduziert werden sollen. Ferner ist es eine Aufgabe der Erfindung, ein Ultraschall-Messsystem mit einer solchen Ultraschall-Messvorrichtung vorzuschlagen, wobei insbesondere Komponenten des Ultraschall-Messsystems für den Einmalgebrauch ausgestaltet sind.

Die diese Aufgabe lösenden Gegenstände der Erfindung sind durch die Merkmale der unabhängigen Patentansprüche gekennzeichnet.

Erfindungsgemäss wird also eine Ultraschall-Messvorrichtung vorgeschlagen zur Messung an einem strömenden Fluid, mit einer Messröhre, welche eine Mittelachse aufweist, die eine Strömungsrichtung für das Fluid festlegt, mit einer ersten Kammer, in welcher ein erster Ultraschallwandler angeordnet ist, und mit einer zweiten Kammer, in welcher ein zweiter Ultraschallwandler angeordnet ist, wobei die Messröhre einen Einlass und einen Auslass für das Fluid aufweist, wobei der erste Ultraschallwandler und der zweite Ultraschallwandler eine geradlinige Messstrecke für das Fluid begrenzen, wobei die erste Kammer und die zweite Kammer so ausgestaltet und angeordnet sind, dass sie jeweils von dem Fluid umströmbar sind, und wobei der erste Ultraschallwandler und der zweite Ultraschallwandler so angeordnet sind, dass sich die Messstrecke in der Strömungsrichtung erstreckt.

Die beiden Ultraschallwandler sind also in dem strömenden Fluid angeordnet, ohne dass sie in einen körperlichen Kontakt mit dem Fluid kommen, weil die Ultraschallwandler in Kammern angeordnet sind, sodass das Fluid in der Messröhre die Kammern mit den Ultraschallwandlern umströmt, ohne in diese Kammern eindringen zu können

Die erfindungsgemässe Ultraschall-Messvorrichtung ermöglicht somit zum einen, dass die Messsignale in Strömungsrichtung oder entgegen der Strömungsrichtung in das Fluid eingebracht werden, wobei die Messsignale nicht schräg zur Strömungsrichtung eingebracht werden, sondern ihre Hauptausbreitungsrichtung mit der Strömungsrichtung einen Winkel von 0° oder von 180° bildet. Somit ist der Winkel, unter dem sich das jeweilige Messsignal in dem Fluid fortpflanzt, nicht mehr von den akustischen Eigenschaften des Fluids abhängig. Jedes Messsignal läuft unabhängig von den akustischen Eigenschaften des Fluids entweder in Strömungsrichtung des Fluids oder entgegen der Strömungsrichtung des Fluids. Dadurch, dass sich die Messsignale entweder in oder entgegen der Strömungsrichtung des Fluids ausbreiten, kann die Messstrecke auch besonders lang ausgestaltet werden, sodass eine sehr hohe Zeitauflösung der jeweiligen Messung resultiert.

Zudem erfährt das Fluid in der Messröhre keine rechtwinklige Umlenkung, das heisst, die Strömung des Fluids wird in der Messröhre, wenn überhaupt, nur unwesentlich beeinträchtigt. Insbesondere weist die Messröhre keine Ecken oder andere kritischen Gebiete auf, welche wesentliche Stagnationen, Turbulenzen oder Ablagerungen des Fluids verursachen würden.

Ferner kann die erfindungsgemässe Ultraschall-Messvorrichtung besonders platzsparend ausgestaltet werden, weil es keiner Einlass- oder Auslassröhren bedarf, die unter einem Winkel von etwa 90° zur Messstrecke angeordnet sind. Sowohl der Einlass als auch der Auslass der Messröhre können in der Mittelachse der Messröhre angeordnet sein.

Vorzugsweise sind die erste Kammer und die zweite Kammer in der Messröhre zwischen dem Einlass und dem Auslass angeordnet.

Eine weitere bevorzugte Massnahme besteht darin, dass der erste Ultraschallwandler und der zweite Ultraschallwandler auf der Mittelachse der Messröhre angeordnet sind. Somit werden beide Ultraschallwandler jeweils symmetrisch von dem Fluid umströmt, woraus eine besonders geringe Beeinflussung der Strömung des Fluids resultiert.

Gemäss einer bevorzugten Ausführungsform weist die Messröhre zwischen dem ersten Ultraschallwandler und dem zweiten Ultraschallwandler einen Strömungsquerschnitt für das Fluid auf, der kleiner ist als der Strömungsquerschnitt am Einlass der Messröhre. Durch diese Massnahme strömt das Fluid auf der Messstrecke mit einer höheren Geschwindigkeit als am Einlass der Messröhre. Mit einer höheren Strömungsgeschwindigkeit lässt sich insbesondere die Zeitauflösung der Messung erhöhen, weil die Laufzeitunterschiede der Messsignale in und entgegen der Strömungsrichtung grösser werden.

Gemäss einer anderen bevorzugten Ausführungsform weist die Messröhre zwischen dem ersten Ultraschallwandler und dem zweiten Ultraschallwandler einen im Wesentlichen konstanten Strömungsquerschnitt für das Fluid auf. Mit dieser Ausführungsform lassen sich Turbulenzen oder Stagnationen des Fluids in der Messröhre besonders effizient reduzieren.

Insbesondere ist es bevorzugt, dass die erste Kammer näher am Einlass angeordnet ist, und die zweite Kammer näher am Auslass angeordnet ist, wobei die erste Kammer auf ihrer dem Einlass zugewandten Seite eine erstes Flussleitelement zum Reduzieren von Turbulenzen aufweist, und/oder wobei die zweite Kammer auf ihrer dem Auslass zugewandten Seite ein zweites Flussleitelement zum Reduzieren von Turbulenzen aufweist. Durch das erste Flussleitelement wird der Strom des Fluids vor der ersten Kammer besonders sanft in zwei Teilströme aufgeteilt, die auf beiden Seiten um die erste Kammer herumströmen, ohne dass es dabei zu wesentlichen Turbulenzen oder zur Ausbildung von Stagnationszonen kommt. In sinngemäss gleicher Weise sorgt das zweite Flusselement dafür, dass die beiden Teilströme, welche die zweite Kammer umströmen, flussabwärts der zweiten Kammer wieder möglichst sanft zusammengeführt werden, ohne dass es dabei zu wesentlichen Turbulenzen oder zur Ausbildung von Stagnationszonen kommt.

Gemäss einer bevorzugten Ausgestaltung weist die Messstrecke ein erstes Ende am ersten Ultraschallwandler auf, sowie ein zweites Ende am zweiten Ultraschallwandler, wobei an jedem Ende der Messstrecke jeweils eine akustische Linse zum Fokussieren von Ultraschallsignalen vorgesehen ist. Durch diese Massnahme lässt sich die Messgenauigkeit noch weiter erhöhen.

Um die Strömung des Fluids in der Messröhre möglichst wenig zu beeinflussen und Turbulenzen sowie Stagnationszonen möglichst weit zu reduzieren oder sogar zu vermeiden, ist es vorteilhaft, dass die erste Kammer und die zweite Kammer in der Strömungsrichtung jeweils ein im Wesentlichen tropfenförmiges Profil aufweisen. Hierdurch sind die beiden Kammern besonders stromlinienförmig.

Eine weitere bevorzugte Massnahme besteht darin, dass die Ultraschall-Messvorrichtung ferner einen Temperatursensor zum Bestimmen der Temperatur des Fluids umfasst. Dies vergrössert den Anwendungsbereich der Messvorrichtung, weil somit auch Kenngrössen des Fluids ermittelt werden können, deren Zusammenhang mit der Schallgeschwindigkeit oder der Schalldämpfung temperaturabhängig ist.

Auch kann es vorteilhaft sein, dass an der Messröhre ein dritter Ultraschallwandler und ein vierter Ultraschallwandler vorgesehen sind, wobei sich der dritte und der vierte Ultraschallwandler gegenüberliegen und jeweils zum Aussenden eines Ultraschallsignals senkrecht zur Strömungsrichtung angeordnet und ausgerichtet sind. Bei diesem dritten und vierten Ultraschallwandler sind also die jeweiligen Sende- und Empfangsflächen für die Ultraschallsignale parallel zur Strömungsrichtung ausgerichtet, sodass die Hauptausbreitungsrichtung der von dem dritten und vierten Ultraschallwandler generierten Ultraschallsignale jeweils senkrecht auf der Strömungsrichtung steht. Der dritte und der vierte Ultraschallwandler lassen sich daher vorteilhaft für eine von der Strömungsgeschwindigkeit des Fluids unabhängige Bestimmung der Schallgeschwindigkeit im Fluid nutzen, und damit zur Ermittlung von Kenngrössen des Fluids, welche von der Schallgeschwindigkeit oder der Schalldämpfung in dem Fluid abhängig sind,

Eine bevorzugte Ausführungsform besteht darin, dass die Ultraschall-Messvorrichtung als Einmalteil für den Einmalgebrauch ausgestaltet ist.

Es wird ferner ein Verfahren zur Herstellung einer erfindungsgemässen Ultraschall-Messvorrichtung vorgeschlagen, bei welchem die Messröhre, die erste Kammer und die zweite Kammer aus einem Kunststoff hergestellt werden.

Gemäss einer bevorzugten Ausführungsform werden die Messröhre und die beiden Kammern einstückig in einem einzigen Blasformungsprozess hergestellt.

Gemäss einer anderen bevorzugten Ausführungsform bestehen die Messröhre und die beiden Kammern aus mehreren Einzelteilen, wobei jedes Einzelteil in einem Spritzgiessverfahren hergestellt wird, und die Einzelteile anschliessend miteinander verbunden, vorzugsweise verschweisst, werden.

Dabei ist es besonders bevorzugt, dass die Messröhre und die beiden Kammern aus genau zwei Einzelteilen geformt werden, die separat hergestellt werden, und anschliessend miteinander verschweisst werden.

Durch die Erfindung wird ferner ein Ultraschall-Messsystem zur Messung an einem strömenden Fluid, vorgeschlagen mit einer Einmalvorrichtung, die für den Einmalgebrauch ausgestaltet ist, mit einer wiederverwendbaren Vorrichtung, die für den Mehrfachgebrauch ausgestaltet ist, mit einem ersten Ultraschallwandler, sowie mit einem zweiten Ultraschallwandler.

Die Einmalvorrichtung umfasst eine Messröhre, eine erste Kammer und eine zweite Kammer, wobei die Messröhre eine Mittelachse aufweist, die eine Strömungsrichtung für das Fluid festlegt, wobei die erste Kammer für das Aussenden eines Signals des ersten Ultraschallwandlers ausgestaltet ist, wobei die zweite Kammer für das Aussenden eines Signals des zweiten Ultraschallwandlers ausgestaltet ist, wobei die Messröhre ferner einen Einlass und einen Auslass für das Fluid aufweist, wobei die erste Kammer und die zweite Kammer eine geradlinige Messstrecke für das Fluid begrenzen, welche sich von der ersten Kammer bis zu der zweiten Kammer erstreckt, wobei die erste Kammer und die zweite Kammer so ausgestaltet und angeordnet sind, dass sie jeweils von dem Fluid umströmbar sind, und dass sich die Messstrecke in der Strömungsrichtung erstreckt.

Die wiederverwendbare Vorrichtung umfasst eine Kontrolleinrichtung, welche zum Ansteuern der Ultraschallwandler und zum Empfangen von Signalen von den Ultraschallwandlern ausgestaltet ist.

Die wiederverwendbare Vorrichtung ist lösbar mit der Einmalvorrichtung verbindbar, sodass die wiederverwendbare Vorrichtung und die Einmalvorrichtung relativ zueinander fixiert sind.

Erfindungsgemäss wird also ein Ultraschall-Messsystem vorgeschlagen, welches eine Einmalvorrichtung umfasst, die bestimmungsgemäss nur ein einziges Mal verwendet werden darf und für die nächste Anwendung durch eine neue, das heisst unbenutzte Einmalvorrichtung ersetzt werden muss, sowie eine wiederverwendbare Vorrichtung, die für die mehrfache Verwendung ausgestaltet ist. Ferner sind der erste und der zweite Ultraschallwandler vorgesehen, die je nach Ausführungsform Bestandteil der Einmalvorrichtung oder Bestandteil der wiederverwendbaren Vorrichtung sein können.

Vorzugsweise umfasst das Ultraschall-Messsystem eine erfindungsgemässe Ultraschall-Messvorrichtung. Dabei sind auch solche Ausgestaltungen möglich, bei welchen der erste und der zweite Ultraschallwandler nicht unmittelbar in der ersten bzw. in der zweiten Kammer angeordnet sind, sondern die Signale der beiden Ultraschallwandler in die beiden Kammern eingekoppelt werden, was sinngemäss gleichwirkend mit einer Anordnung der Ultraschallwandler in den Kammern ist.

Um eine möglichst einfach zu handhabende Verbindung zwischen der Einmalvorrichtung und der wiederverwendbaren Vorrichtung zu gewährleisten, ist es bevorzugt, dass die Einmalvorrichtung und die wiederverwendbare Vorrichtung mittels einer Klemmverbindung miteinander verbindbar sind.

Ferner ist es bevorzugt, wenn die wiederverwendbare Vorrichtung einen Vorsprung umfasst, welcher beim Zusammensetzen mit der Einmalvorrichtung in eine Ausnehmung in der Einmalvorrichtung eingreift. Dabei sind der Vorsprung und die Ausnehmung vorzugsweise für ein formschlüssiges Zusammenwirken ausgestaltet, sodass die Einmalvorrichtung in einfacher Weise auf die wiederverwendbare Vorrichtung aufsetzbar bzw. von dieser abziehbar ist.

Vorzugsweise sind der erste Ultraschallwandler und der zweite Ultraschallwandler Bestandteil der Einmalvorrichtung, also auch für den Einmalgebrauch konzipiert.

Erfindungsgemäss wird ferner eine Einmalvorrichtung für ein Ultraschall-Messsystem vorgeschlagen, das erfindungsgemäss ausgestaltet ist.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: eine schematische Schnittdarstellung eines ersten Ausführungsbeispiels einer erfindungsgemässen Ultraschall-Messvorrichtung,
- Fig. 2:: eine schematische Schnittdarstellung eines zweiten Ausführungsbeispiels einer erfindungsgemässen Ultraschall-Messvorrichtung,
- Fig. 3:: eine schematische Schnittdarstellung eines dritten Ausführungsbeispiels einer erfindungsgemässen Ultraschall-Messvorrichtung,
- Fig. 4:: eine schematische Schnittdarstellung eines vierten Ausführungsbeispiels einer erfindungsgemässen Ultraschall-Messvorrichtung,
- Fig. 5:: eine Darstellung einer Variante für die Ausgestaltung einer akustischen Linse,
- Fig. 6:: eine schematische Schnittdarstellung eines fünften Ausführungsbeispiels einer erfindungsgemässen Ultraschall-Messvorrichtung,
- Fig. 7:: eine perspektivische Darstellung des fünften Ausführungsbeispiels,
- Fig. 8:: eine schematische Schnittdarstellung einer ersten Variante des fünften Ausführungsbeispiels,
- Fig. 9:: eine schematische Schnittdarstellung einer zweiten Variante des fünften Ausführungsbeispiels,
- Fig. 10:: eine perspektivische Darstellung einer Ausführungsform der erfindungsgemässen Ultraschall-Messvorrichtung, die einstückig hergestellt wurde,
- Fig. 11-14:: verschieden Varianten für die Teile, aus denen eine erfindungsgemässe Ultraschall-Messvorrichtung herstellbar ist,
- Fig 15:: eine schematische Darstellung eines ersten Ausführungsbeispiels eines erfindungsgemässen Ultraschall-Messsystems,
- Fig. 16:: eine perspektivische Darstellung einer ersten Variante des ersten Ausführungsbeispiels des Ultraschall-Messsystems,
- Fig. 17:: die erste Variante aus Fig. 16 aus einer anderen Perspektive,
- Fig. 18:: eine perspektivische Darstellung einer zweiten Variante des ersten Ausführungsbeispiels des Ultraschall-Messsystems,
- Fig. 19:: ein bevorzugtes Ausführungsbeispiel der Einmalvorrichtung in einer perspektivischen Explosionsdarstellung,
- Fig. 20:: das Ausführungsbeispiel aus Fig. 19 in einer Schnittdarstellung,
- Fig. 21:: eine Aufsicht auf einen Kammereinsatz,
- Fig. 22:: eine Schnittdarstellung des Kammereinsatzes in einem Schnitt entlang der Strömungsrichtung,
- Fig. 23:: eine Variante für den Kammereinsatz in einer zu Fig. 22 analogen Darstellung,
- Fig. 24:: eine mögliche Ausführungsform für die Signalverbindungen, welche eine elektrische Verbindung zwischen der Einmalvorrichtung und der wiederverwendbaren Vorrichtung ermöglichen,
- Fig. 25:: eine weitere mögliche Ausführungsform für die Signalverbindungen, welche eine elektrische Verbindung zwischen der Einmalvorrichtung und der wiederverwendbaren Vorrichtung ermöglichen,
- Fig. 26:: eine weitere mögliche Ausführungsform für die Signalverbindungen, welche eine elektrische Verbindung zwischen der Einmalvorrichtung und der wiederverwendbaren Vorrichtung ermöglichen,
- Fig. 27:: eine Ausführungsform für die Kommunikation zwischen der Speichereinheit der Einmalvorrichtung und dem Speicherinterface der wiederverwendbaren Vorrichtung,
- Fig. 28:: die beiden Komponenten für die Kommunikation aus Fig. 27,
- Fig. 29:: eine weitere Ausführungsform für die Kommunikation zwischen der Einmalvorrichtung und dem Speicherinterface der wiederverwendbaren Vorrichtung,
- Fig. 30:: einen Schnitt durch die Ausführungsform der Fig. 29 in einem Schnitt entlang der Strömungsrichtung,
- Fig. 31:: eine vorteilhafte Massnahme für die Ausgestaltung der Einmalvorrichtung,
- Fig. 32:: eine weitere vorteilhafte Massnahme für die Ausgestaltung der Einmalvorrichtung,
- Fig. 33:: eine perspektivische Darstellung eines zweiten Ausführungsbeispiels eines erfindungsgemässen Ultraschall-Messsystems,
- Fig. 34:: eine perspektivische Schnittdarstellung der Einmalvorrichtung des zweiten Ausführungsbeispiels,
- Fig. 35:: eine vergrösserte Darstellung eines Ausschnitts aus Fig. 34, und
- Fig. 36:: eine schematische Darstellung zur Erläuterung der Einkopplung des Ultraschallsignals in die Messstrecke des zweiten Ausführungsbeispiels.

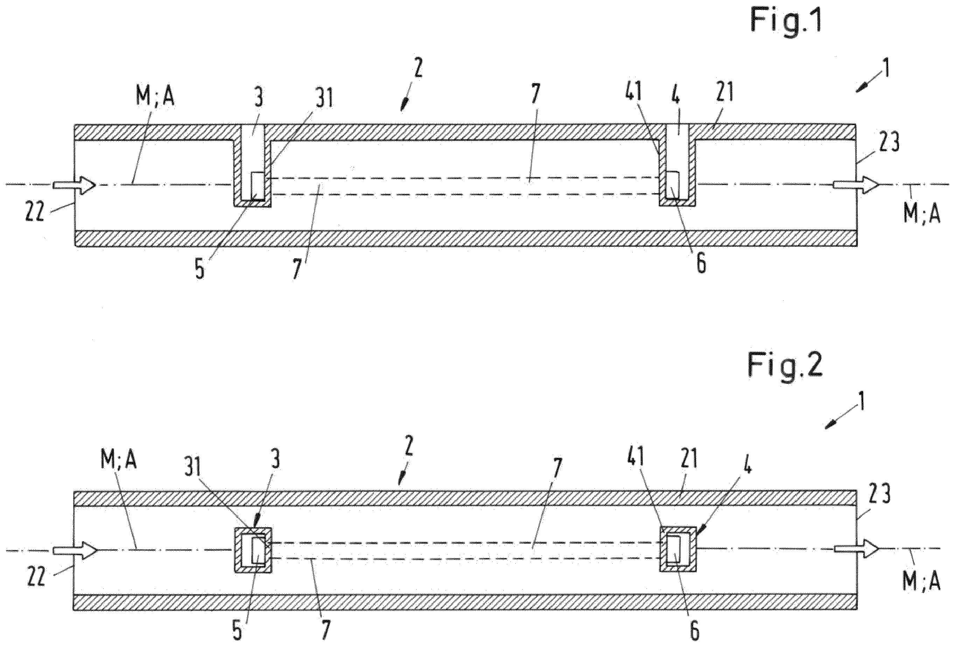

Fig. 1 zeigt in einer schematischen Schnittdarstellung ein erstes Ausführungsbeispiel einer erfindungsgemässen Ultraschall-Messvorrichtung, die gesamthaft mit dem Bezugszeichen 1 versehen ist. Die Ultraschall-Messvorrichtung 1 ist zur Messung an einem strömenden Fluid ausgestaltet und umfasst eine Messröhre 2, welche von dem Fluid durchströmt wird. Die Messröhre 2 weist eine Mittelachse M auf, die eine Strömungsrichtung A für das Fluid festlegt. Die Messröhre 2 ist bei dem ersten Ausführungsbeispiel als zylindrische geradlinige Röhre mit einem kreisförmigen Querschnitt senkrecht zu ihrer Mittelachse M ausgestaltet und weist eine Wandung 21 auf, welche die Messröhre 2 lateral begrenzt. Die Messröhre 2 hat einen Einlass 22, durch welchen das Fluid in die Messröhre 2 einströmt, sowie einen Auslass 23, durch welchen das Fluid die Messröhre 2 verlässt, wie dies durch die Pfeile ohne Bezugszeichen am Einlass 22 und am Auslass 23 angedeutet ist. Der Einlass 22 und der Auslass 23 sind jeweils als kreisförmige Fläche ausgestaltet, deren Mittelpunkt jeweils auf der Mittelachse M der Messröhre 2 liegt. Die Messröhre 2 hat zwischen dem Einlass 22 und dem Auslass 23 eine im Wesentlichen geradlinige, d.h. ungekrümmte und nicht abgewinkelte Ausgestaltung. Durch diese lineare Ausgestaltung der Messröhre 2 hat die Ultraschall-Messvorrichtung 1 eine besonders platzsparende Form.

Ferner sind eine erste Kammer 3 und eine zweite Kammer 4 vorgesehen, wobei in der ersten Kammer 3 ein erster Ultraschallwandler 5 angeordnet ist und in der zweiten Messkammer 4 ein zweiter Ultraschallwandler 6. Der erste Ultraschallwandler 5 und der zweite Ultraschallwandler 6 begrenzen eine geradlinige Messtrecke 7 für das Fluid, welche sich zwischen den beiden Ultraschallwandlern 5, 6 befindet. Jeder Ultraschallwandler 5, 6 ist zum jeweiligen Aussenden und Empfangen von Ultraschallsignalen ausgestaltet.

Die erste Kammer 3 und die zweite Kammer 4 sind in der Messröhre 2 zwischen dem Einlass 22 und dem Auslass 23 angeordnet, wobei die erste Kammer 3 näher am Einlass 22 angeordnet ist, und die zweite Kammer 4 näher am Auslass 23 der Messröhre 2. Die erste Kammer 3 und die zweite Kammer 4 sind jeweils so ausgestaltet und angeordnet, dass jede der beiden Kammern 3 und 4 von dem Fluid umströmbar ist und das Fluid nicht in die erste und zweite Kammer 3 bzw. 4 eindringen kann, sodass die Ultraschallwandler 5, 6 nicht mit dem Fluid im Kontakt kommen.

Der erste Ultraschallwandler 5 und der zweite Ultraschallwandler 6 sind so angeordnet und ausgerichtet, dass sie Ultraschallsignale miteinander austauschen können, d.h. der zweite Ultraschallwandler 6 kann ein von dem ersten Ultraschallwandler 5 ausgesendetes Ultraschallsignal empfangen, und der erste Ultraschallwandler 5 kann ein von dem zweiten Ultraschallwandler 6 ausgesendetes Ultraschallsignal empfangen. Ferner sind die Ultraschallwandler 5, 6, so angeordnet, dass sich die Messstrecke 7 in der Strömungsrichtung A erstreckt. Durch diese Anordnung werden die von den beiden Ultraschallwandlern 5, 6 als Messsignale ausgestrahlten Ultraschallsignale jeweils entweder in der Strömungsrichtung A oder entgegen der Strömungsrichtung A in das Fluid eingebracht, aber nicht schräg zu der Strömungsrichtung A. Die Hauptausbreitungsrichtung der Messsignale schliesst also mit der Strömungsrichtung A einen Winkel von 0° oder von 180° ein. Somit ist der Winkel, unter dem sich das jeweilige Messsignal in dem Fluid fortpflanzt, nicht mehr von den akustischen Eigenschaften des Fluids abhängig. Jedes Messsignal läuft unabhängig von den akustischen Eigenschaften des Fluids entweder in Strömungsrichtung A des Fluids oder entgegen der Strömungsrichtung A des Fluids.

Bei dem ersten Ausführungsbeispiel sind die erste Kammer 3 und die zweite Kammer 4 jeweils als eine Einstülpung in der Wandung 21 der Messröhre 2 ausgestaltet. Die erste Kammer 3 und die zweite Kammer 4 sind also jeweils eine in das Innere der Messröhre 2 gerichtete Vertiefung in der Wandung 21 der Messröhre 2. Dabei sind die erste Kammer 3 und die zweite Kammer 4 jeweils so tief, dass der erste Ultraschallwandler 5 und der zweite Ultraschallwandler 6 auf der Mittelachse M der Messröhre 2 angeordnet werden können. Gleichzeitig sind die beiden Ultraschallwandler 5, 6 durch die Wandung der jeweiligen Kammer 3 bzw. 4 vor einem Kontakt mit dem Fluid geschützt.

Die erste Kammer 3 wird auf ihrer dem Einlass 22 abgewandten Seite durch eine erste Wand 31 begrenzt, welche als planare, d.h. ungekrümmte Wand ausgestaltet ist, und welche senkrecht auf der Mittelachse M der Messröhre 2 und damit senkrecht auf der Strömungsrichtung A steht. Der erste Ultraschallwandler 5 ist in der ersten Kammer 3 an der ersten Wand 31 angeordnet, sodass die Hauptausbreitungsrichtung der von dem ersten Ultraschallwandler 5 ausgesendeten Messsignale in der Strömungsrichtung A liegt. Die Sende- und Empfangsfläche des ersten Ultraschallwandlers 5 steht somit senkrecht auf der Mittelachse M der Messröhre 2.

Die zweite Kammer 4 wird auf ihrer dem Auslass 23 abgewandten Seite durch eine zweite Wand 41 begrenzt, welche als planare, d.h. ungekrümmte Wand ausgestaltet ist, und welche senkrecht auf der Mittelachse M der Messröhre 2 und damit senkrecht auf der Strömungsrichtung A steht. Der zweite Ultraschallwandler 6 ist in der zweiten Kammer 4 an der zweiten Wand 41 angeordnet, sodass die Hauptausbreitungsrichtung der von dem Zweiten Ultraschallwandler 6 ausgesendeten Messsignale entgegen der Strömungsrichtung A liegt. Die Sende- und Empfangsfläche des zweiten Ultraschallwandlers 6 steht somit senkrecht auf der Mittelachse M der Messröhre 2.

Die Messröhre 2 ist so ausgestaltet, dass sie zumindest zwischen der ersten Wand 31 der ersten Kammer 3 und der zweiten Wand 41 der zweiten Kammer 4 eine konstante Querschnittsfläche senkrecht zur Mittelachse M aufweist, sodass der Strömungsquerschnitt für das Fluid zwischen dem ersten Ultraschallwandler 5 und dem zweiten Ultraschallwandler 6 zumindest im Wesentlichen konstant und vorzugsweise konstant ist. Mit dieser Ausgestaltung lassen sich Turbulenzen oder auch Stagnationen des Fluids auf der Messstrecke 7 zwischen dem ersten Ultraschallwandler 5 und dem zweiten Ultraschallwandler 6 besonders effizient reduzieren oder sogar vermeiden. Mit dem Strömungsquerschnitt ist die Grösse derjenigen Fläche gemeint, welche dem Fluid senkrecht zu seiner Strömungsrichtung zur Verfügung steht. Bei der Ausgestaltung gemäss dem ersten Ausführungsbeispiel ist der Strömungsquerschnitt entlang der Messtrecke konstant und entspricht der Kreisfläche der zylindrischen Messröhre 2 senkrecht zur Mittelachse A.

Die Ausgestaltung der Ultraschall-Messvorrichtung 1 hat den erheblichen Vorteil, dass die als Messsignale dienenden Ultraschallsignale unter einem Winkel von 0° oder 180° - also insbesondere nicht schräg - zur Strömungsrichtung A in das Fluid eingebracht werden können, und gleichzeitig eine besonders platzsparende Ausgestaltung der Ultraschall-Messvorrichtung 1 möglich ist, weil auf eine U-förmige oder eine Z-förmige Ausgestaltung der Ultraschall-Messvorrichtung verzichtet werden kann.

Da sich die Messstrecke 7 in der Strömungsrichtung A erstreckt, kann die Messstrecke 7 auch deutlich länger ausgestaltet werden als bei Anordnungen, bei welchen die Messstrecke schräg oder schiefwinklig zur Strömungsrichtung angeordnet ist. Eine lange Messstrecke 7 hat den Vorteil, dass sie eine deutlich höhere Zeitauflösung und damit eine höhere Messgenauigkeit ermöglicht.

Jeder der Ultraschallwandler 5, 6 ist in an sich bekannter Weise über jeweils eine Signalleitung (nicht dargestellt) mit einer Kontrolleinrichtung (nicht dargestellt) signalverbunden. Über die jeweilige Signalleitung steuert die Kontrolleinrichtung die Ultraschallwandler 5, 6 zum Aussenden von Ultraschallsignalen an und erhält die von den Ultraschallwandlern 5, 6 empfangenen Signale. Die von den Ultraschallwandlern 5, 6 empfangenen Messsignale werden an eine Auswerteeinheit (nicht dargestellt) übermittelt, welche in die Kontrolleinrichtung integriert sein kann. In der Auswerteeinheit werden die empfangenen Messsignale analysiert und ausgewertet. Vorzugsweise wird in der Auswerteeinheit zumindest die Strömungsgeschwindigkeit und damit der Durchfluss des Fluids ermittelt. Die Kontrolleinrichtung und die Auswerteeinheit können auch in einer Regeleinrichtung integriert sein, mit welcher der Durchfluss des Fluids geregelt wird.

Die Ultraschallwandler 5, 6 können in jeder an sich bekannten Art ausgestaltet sein, insbesondere als piezoelektrische Wandler. Die Frequenz der Ultraschallsignale liegt typischerweise im Megahertz-Bereich, beispielsweise im Bereich von 1 MHz bis 30 MHz.

Der erste Ultraschallwandler 5 und der zweite Ultraschallwandler 6 sind so angeordnet, dass der erste Ultraschallwandler 5 ein erstes Messsignal in der Strömungsrichtung A an den zweiten Ultraschallwandler 6 aussenden kann, und ein von dem zweiten Ultraschallwandler 6 entgegen der Strömungsrichtung ausgesendetes zweites Messsignal empfangen kann.

Mit der Richtung des Ultraschallsignals ist jeweils die Hauptausbreitungsrichtung des von dem entsprechenden Ultraschallwandler 5, 6 ausgesendeten Ultraschallsignals gemeint. Die Hauptausbreitungsrichtung steht üblicherweise senkrecht auf der Oberfläche des piezoelektrischen Elements, welches die Sende- und Empfangsfläche des entsprechenden Ultraschallwandlers 5, 6 bildet.

Zur Bestimmung des Durchflusses des Fluids wird die Messröhre 2 in den Strömungsweg des Fluids eingebaut, sodass das Fluid durch den Einlass 22 in die Messröhre 2 einströmt und die Messröhre 2 durch den Auslass 23 verlässt.

Der ersten Ultraschallwandler 5 sendet ein erstes Messsignal aus, wobei das erste Messsignal in der Strömungsrichtung A, also parallel zur Mittelachse M der Messröhre 2 ausgesendet wird. Das erste Messsignal wird von dem zweiten Ultraschallwandler 6 nach Durchlaufen der Messstrecke 7 empfangen und an die Auswerteeinheit übermittelt.

Von dem zweiten Ultraschallwandler 6 wird ein zweites Messsignal ausgesendet, wobei das zweite Messsignal auch parallel zur Mittelachse M der Messröhre 2 aber entgegen der Strömungsrichtung A ausgesendet wird. Das zweite Messsignal wird von dem ersten Ultraschallwandlern 5 nach Durchlaufen der Messstrecke 7 empfangen und an die Auswerteeinheit übermittelt.

In der Auswerteeinheit wird die Laufzeitdifferenz zwischen dem ersten Messsignal und dem zweiten Messsignal ermittelt, also zwischen demjenigen Messsignal, welche durch das strömende Fluid beschleunigt wurde, und demjenigen Messsignal, welches durch das strömende Fluid verlangsamt wurde. Diese Laufzeitdifferenz zwischen dem Messsignal in Strömungsrichtung A und dem Messsignal entgegen der Strömungsrichtung A ist direkt abhängig von der Strömungsgeschwindigkeit des Fluids in der Messröhre 2. Somit kann aus der Laufzeitdifferenz die Strömungsgeschwindigkeit und damit der Durchfluss des Fluids durch die Messröhre 2 ermittelt werden.

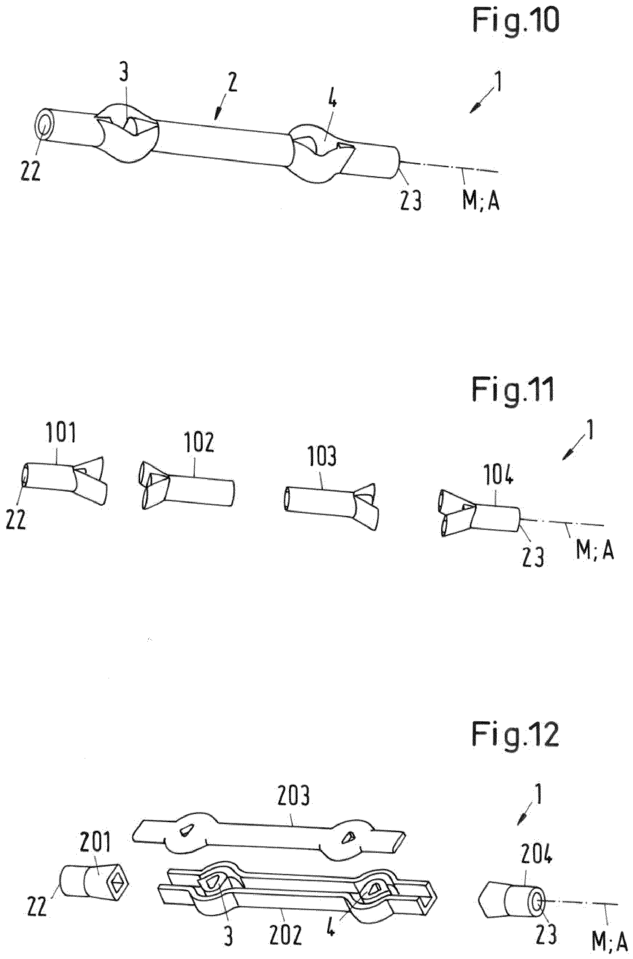

Besonders vorteilhaft ist dabei neben der Länge der Messstrecke 7, dass die Messröhre 2 keine Abwinklungen ausweist, sondern im Wesentlichen geradlinig ist. Die zylindrische Ausgestaltung der Messröhre 2 zumindest zwischen der ersten Kammer 3 und der zweiten Kammer 4 ist natürlich nicht zwingend. Selbstverständlich kann die Messröhre 2 auch mit einem rechteckigen oder quadratischen Querschnitt senkrecht zur ihrer Mittelachse M ausgestaltet sein. Auf der Messstrecke 7 ist der Strömungsquerschnitt dann die Fläche des Rechtecks oder des Quadrats in einem Schnitt senkrecht zur Mittelachse M. Auch ist es keinesfalls notwendig, dass der Querschnitt der Messröhre 2 von der Form her über die gesamte Messröhre 2 konstant ist. So sind beispielsweise in den Fig. 12-14 Ausführungsformen der Messröhre 2 gezeigt, bei denen die Messröhre 2 am Einlass 22 und am Auslass 23 jeweils eine Kreisfläche als Querschnitt senkrecht zur Mittelachse M hat, und im Bereich zwischen der ersten Kammer 3 und der zweiten Kammer 4 ein Rechteck oder ein Quadrat als Querschnitt senkrecht zur Mittelachse M.

Fig. 2 zeigt in einer schematischen Schnittdarstellung ein zweites Ausführungsbeispiel einer erfindungsgemässen Ultraschall-Messvorrichtung 1 in einer zu Fig. 1 analogen Darstellung. Bei der folgenden Beschreibung des zweiten Ausführungsbeispiels wird nur auf die Unterschiede zu dem ersten Ausführungsbeispiel näher eingegangen. Ansonsten gelten die Erläuterungen bezüglich des ersten Ausführungsbeispiels in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel.

Das zweite Ausführungsbeispiel der erfindungsgemässen Ultraschall-Messvorrichtung 1 unterscheidet sich von dem ersten Ausführungsbeispiel hauptsächlich durch die Ausgestaltung der ersten und der zweiten Kammer 3 bzw. 4. Bei dem zweiten Ausführungsbeispiel sind die erste Kammer 3 und die zweite Kammer 4 jeweils so ausgestaltet, dass sie sich als Kanal vollständig durch die Messröhre 2 hindurch erstrecken, wobei die Längserstreckung jeder Kammer 3, 4 senkrecht auf der Mittelachse M der Messröhre 2 stehen. Die Kammern 3, 4 bilden also jeweils eine Säule, die in der Messröhre 2 senkrecht zur Mittelachs M angeordnet ist, und die sich jeweils vollständig durch die Messröhre 2 und die sie begrenzende Wandung 21 hindurch erstreckt, Jede Kammer 3, 4 ist durch die sie senkrecht zur Mittelachse M begrenzenden Wände gegen das Eindringen des Fluids geschützt. In einem Schnitt entlang der Mittelachse M - wie er in Fig. 2 dargestellt ist - hat jede Kammer 3, 4 eine rechteckige Querschnittsfläche. Insbesondere sind auch hier wieder die erste Wand 31 der ersten Kammer 3 und die zweite Wand 41 der zweiten Kammer 4 jeweils als planare, also nicht gekrümmte Wand ausgestaltet, die senkrecht auf der Mittelachse M der Messröhre 2 steht..

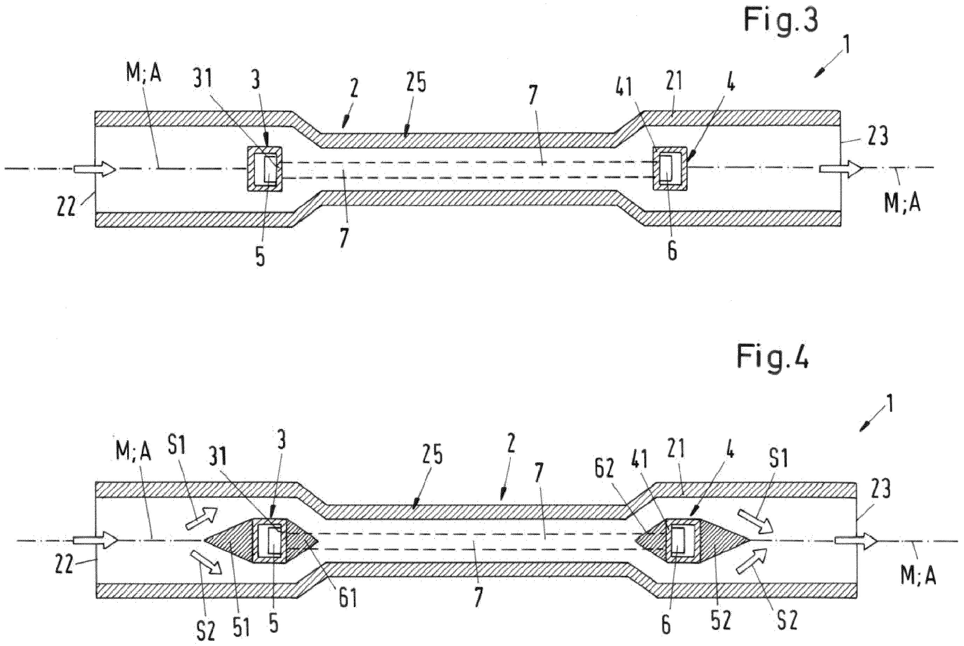

Fig. 3 zeigt in einer schematischen Schnittdarstellung ein drittes Ausführungsbeispiel einer erfindungsgemässen Ultraschall-Messvorrichtung 1 in einer zu Fig. 2 analogen Darstellung. Bei der folgenden Beschreibung des dritten Ausführungsbeispiels wird nur auf die Unterschiede zu den vorangehend beschriebenen Ausführungsbeispielen näher eingegangen. Ansonsten gelten die Erläuterungen bezüglich der vorangehend beschriebenen Ausführungsbeispiele in gleicher Weise oder in sinngemäss gleicher Weise auch für das dritte Ausführungsbeispiel. Bei dem dritten Ausführungsbeispiel sind gleiche Teile oder von der Funktion her gleichwertige Teile mit den gleichen Bezugszeichen bezeichnet wie bei den vorangehend beschriebenen Ausführungsbeispielen.

Das dritte Ausführungsbeispiel der erfindungsgemässen Ultraschall-Messvorrichtung 1 ist ähnlich ausgestaltet wie das zweite Ausführungsbeispiel (Fig. 2). Allerdings ist bei dem dritten Ausführungsbeispiel die Messröhre 2 mit einem Verjüngungsbereich 25 ausgestaltet, welcher in Strömungsrichtung A gesehen zwischen der ersten Kammer 3 und der zweiten Kammer 4 angeordnet ist. In dem Verjüngungsbereich 25 hat die Messröhre 2 einen kleineren Strömungsquerschnitt als am Einlass 22, wo die Messröhre 2 einen grösseren Strömungsquerschnitt aufweist. Dadurch hat die Messröhre 2 zwischen dem ersten Ultraschallwandler 5 und dem zweiten Ultraschallwandler 6 einen Strömungsquerschnitt für das Fluid der kleiner ist als der Strömungsquerschnitt am Einlass 22.

Stromabwärts der zweiten Kammer 4 und insbesondere am Auslass 23 weist die Messröhre 2 wieder einen grösseren Strömungsquerschnitt auf als im Verjüngungsbereich 25. Vorzugsweise ist der Strömungsquerschnitt der Messröhre 2 am Auslass 23 gleich gross wie am Einlass 22. In Strömungsrichtung A gesehen hat die Messröhre 2 also am Einlass den grösseren Strömungsquerschnitt verjüngt sich dann im Bereich der ersten Kammer 3 auf den kleineren Strömungsquerschnitt und erweitert sich dann im Bereich der zweiten Kammer 4 wieder auf den grösseren Strömungsquerschnitt, den die Messröhre 2 auch am Auslass 22 hat.

Diese Ausgestaltung hat den Vorteil, dass das Fluid im Verjüngungsbereich 25 und damit auch auf der Messstrecke 7 eine höhere Strömungsgeschwindigkeit aufweist als am Einlass 22 der Messröhre 2. Durch diese Massnahme lässt sich die Laufzeitdifferenz zwischen demjenigen Messsignal, welche durch das strömende Fluid beschleunigt wird, und demjenigen Messsignal, welches durch das strömende Fluid verlangsamt wird, vergrössern. Dies bedeutet eine vorteilhafte höhere Auflösung der Messung.

Fig. 4 zeigt in einer schematischen Schnittdarstellung ein viertes Ausführungsbeispiel einer erfindungsgemässen Ultraschall-Messvorrichtung 1 in einer zu Fig. 3 analogen Darstellung. Bei der folgenden Beschreibung des vierten Ausführungsbeispiels wird nur auf die Unterschiede zu den vorangehend beschriebenen Ausführungsbeispielen näher eingegangen. Ansonsten gelten die Erläuterungen bezüglich der vorangehend beschriebenen Ausführungsbeispiele in gleicher Weise oder in sinngemäss gleicher Weise auch für das vierte Ausführungsbeispiel. Bei dem vierten Ausführungsbeispiel sind gleiche Teile oder von der Funktion her gleichwertige Teile mit den gleichen Bezugszeichen bezeichnet wie bei den vorangehend beschriebenen Ausführungsbeispielen.

Das vierte Ausführungsbeispiel der erfindungsgemässen Ultraschall-Messvorrichtung 1 ist ähnlich ausgestaltet wie das dritte Ausführungsbeispiel (Fig. 3), kann aber natürlich auch ähnlich wie das erste (Fig. 1) oder das zweite Ausführungsbeispiel (Fig. 2) ausgestaltet sein, also ohne den Verjüngungsbereich 25.

Bei dem vierten Ausführungsbeispiel der erfindungsgemässen Ultraschallmessvorrichtung 1 weist die erste Kammer 3 auf ihrer dem Einlass 22 zugewandten Seite ein erstes Flussleitelement 51 auf, welches so ausgestaltet ist, dass es den Fluidstrom in Strömungsrichtung A gesehen vor der ersten Kammer 3 möglichst sanft in zwei Teilströme S1 und S2 aufteilt, von denen einer, nämlich der Teilstrom S1, darstellungsgemäss oberhalb der ersten Kammer 3 herum geführt wird, und der andere, nämlich der Teilstrom S2, darstellungsgemäss unterhalb der ersten Kammer 3 herum geführt wird. Dazu hat das erste Flussleitelement 51 in Strömungsrichtung A gesehen beispielsweise einen dreieckigen Querschnitt und insbesondere den Querschnitt eines gleichschenkligen Dreiecks, dessen Spitze dem Einlass 22 zugewandt ist, und dessen Basis bündig an der ersten Kammer 3 anliegt. Durch diese Ausgestaltung wird das Fluid in zwei im Wesentlichen gleich starke Teilströme S1, S2 aufgeteilt und unerwünschte Strömungserscheinungen, wie beispielsweise Turbulenzen, Kavitationen oder die Ausbildung von Stagnationsbereichen, lassen sich zumindest deutlich reduzieren. Die dreieckige Ausgestaltung des ersten Flussleitelements 51 ist beispielhaft zu verstehen. Es sind auch andere stromlinienförmige Ausgestaltungen möglich, mit denen sich der Fluidstrom möglichst sanft in die beiden Teilströme S1 und S2 aufteilen lässt.

Vorzugsweise weist die zweite Kammer 4 auf ihrer dem Auslass 23 zugewandten Seite ein zweites Flussleitelement 52 auf, welches so ausgestaltet ist, dass es die beiden Teilströme S1 und S2 in Strömungsrichtung A gesehen hinter der zweiten Kammer 4 möglichst sanft wieder zusammenführt. Dazu hat das zweite Flussleitelement 52 - in sinngemäss gleicher Weise wie das erste Flussleitelement 51 - in Strömungsrichtung A gesehen beispielsweise einen dreieckigen Querschnitt und insbesondere den Querschnitt eines gleichschenkligen Dreiecks, dessen Spitze dem Auslass 23 zugewandt ist und dessen Basis bündig an der zweiten Kammer 4 anliegt.

Als weitere optionale Massnahme können eine oder mehrere akustische Linse(n) 61, 62 vorgesehen sein, um die Ultraschallsignale bzw. die Messsignale zu fokussieren. Diese akustischen Linsen 61 und/oder 62 können natürlich auch bei den anderen Ausführungsbeispielen vorgesehen sein.

Bei dem in Fig. 4 dargestellten vierten Ausführungsbeispiel sind insgesamt zwei akustische Linsen 61, 62 vorgesehen, nämlich je eine an jedem Ende der Messstrecke 7. Die Messstrecke 7 hat ein erstes Ende am ersten Ultraschallwandler 5 sowie ein zweites Ende am zweiten Ultraschallwandler 6. An dem ersten Ende der Messstrecke 7 ist eine erste akustische Linse 61 angeordnet, und am zweiten Ende der Messstrecke 7 ist eine zweite akustische Linse 62 angeordnet. Die erste akustische Linse 61 ist vorzugsweise aussenliegend an der ersten Wand 31 der ersten Kammer 3 angeordnet, und die zweite akustische Linse 62 ist vorzugsweise aussenliegend an der zweiten Wand 41 der zweiten Kammer 4 angeordnet. Beide akustischen Linsen 61 und 62 können in an sich bekannter Weise so ausgestaltet sein, dass sie die ausgesendeten Ultraschallsignale fokussieren oder parallelisieren und die zu empfangenden Ultraschallsignale auf den jeweiligen Ultraschallwandler 5, 6 lenken. Vorzugsweise sind die akustischen Linsen 61, 62 in sinngemäss gleicher Weise wie die Flussleitelemente 51, 52 jeweils so ausgestaltet, dass sie den Fluidstrom möglichst sanft aufteilen (zweite akustische Linse 62) bzw. möglichst sanft zusammenführen (erste akustische Linse 61), sodass Turbulenzen im Fluidstrom zumindest reduziert werden. Die dreieckige Ausgestaltung der akustischen Linsen 61 ,62 ist beispielhaft zu verstehen. Es sind auch andere Ausgestaltungen möglich, wie zum Beispiel konvexe und konkave Kurven, mit denen sich die Ultraschallsignale fokussieren oder parallelisieren lassen.

In dem vierten Ausführungsbeispiel sind die beiden akustischen Linsen 61, 62 jeweils mit einem in Strömungsrichtung A gesehen dreieckigen Querschnitt ausgestaltet, insbesondere mit einem Querschnitt, welcher ein gleichschenkliges Dreieck ist. Dabei sind die akustischen Linsen 61, 62 so angeordnet, dass sich die Spitzen der beiden gleichschenkligen Dreiecke gegenüberliegen, und ihre Basis bündig an der ersten Wand 31 bzw. an der zweiten Wand 41 anliegen.

Vorzugsweise bestehen die beiden akustischen Linsen 61, 62 aus einem Material, welches die gleichen akustischen Eigenschaften hat wie das Fluid, sodass es an der jeweiligen Grenzfläche zwischen der akustischen Linse 61 oder 62 und dem Fluid nicht zu einer Änderung des Winkels in der Hauptausbreitungsrichtung der Ultraschallsignale kommt.

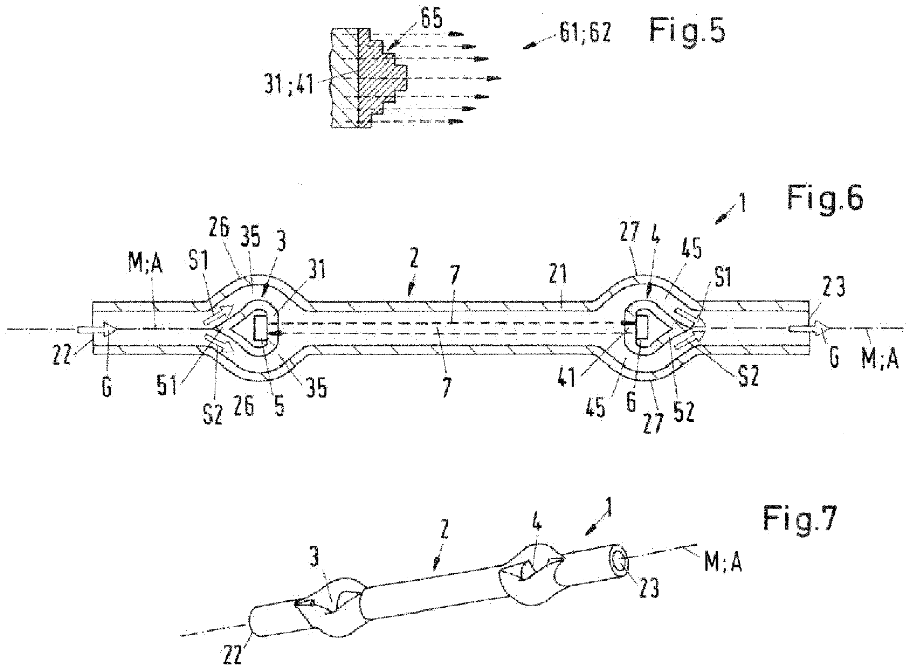

Fig. 5 zeigt eine Variante für die Ausgestaltung der beiden akustischen Linsen 61, 62. Bei dieser Variante haben die beiden Schenkel der gleichschenklig dreieckigen Querschnittsfläche jeder akustischen Linse 61, 62 jeweils eine Stufenstruktur 65, sodass jedes Ultraschallsignal bzw. jedes Messsignal, welche in Fig. 5 durch die gestrichelten Pfeile ohne Bezugszeichen dargestellt sind, jeweils auf eine Grenzfläche zwischen der akustischen Linse 61, 62 treffen, die senkrecht auf ihrer Hauptausbreitungsrichtung steht, sodass es an dieser Grenzfläche zu keiner Änderung bezüglich des Winkels der Signalausbreitung kommt.

Fig. 6 zeigt in einer schematischen Schnittdarstellung ein fünftes Ausführungsbeispiel einer erfindungsgemässen Ultraschall-Messvorrichtung 1 in einer zu Fig. 4 analogen Darstellung. Bei der folgenden Beschreibung des fünften Ausführungsbeispiels wird nur auf die Unterschiede zu den vorangehend beschriebenen Ausführungsbeispielen näher eingegangen. Ansonsten gelten die Erläuterungen bezüglich der vorangehend beschriebenen Ausführungsbeispiele in gleicher Weise oder in sinngemäss gleicher Weise auch für das fünfte Ausführungsbeispiel. Bei dem fünften Ausführungsbeispiel sind gleiche Teile oder von der Funktion her gleichwertige Teile mit den gleichen Bezugszeichen bezeichnet wie bei den vorangehend beschriebenen Ausführungsbeispielen.

Zum besseren Verständnis zeigt Fig. 7 zusätzlich noch eine perspektivische Darstellung des fünften Ausführungsbeispiels der erfindungsgemässen Ultraschall-Messvorrichtung 1.

Bei dem fünften Ausführungsbeispiel der erfindungsgemässen Ultraschallmessvorrichtung 1 sind die erste Kammer 3 und die zweite Kammer 4 jeweils derart ausgestaltet, dass das erste Flussleitelement 51 integraler Bestandteil der ersten Kammer 3 ist und das zweite Flussleitelement 52 integraler Bestandteil der zweiten Kammer 4.

Hierzu sind die erste Kammer 3 und die zweite Kammer 4 jeweils so ausgestaltet, dass sie in der Strömungsrichtung A gesehen jeweils ein im Wesentlichen tropfenförmiges Profil aufweisen. Dabei ist die Spitze des tropfenförmigen Profils der ersten Kammer 3 auf den Einlass 22 hin ausgerichtet, und die Spitze des tropfenförmigen Profils der zweiten Kammer 4 ist auf den Auslass 23 hin ausgerichtet. Der Boden des tropfenförmigen Profils bildet bei der ersten Kammer 3 die erste Wand 31 und bei der zweiten Kammer 4 die zweite Wand 41, wobei innerhalb der ersten Kammer 3 der erste Ultraschallwandler 5 an der ersten Wand 31 angeordnet ist, und innerhalb der zweiten Kammer 4 an der zweiten Wand 41 der zweite Ultraschallwandler 6 angeordnet ist. Ziel dieser Ausgestaltung ist ein möglichst stromlinienförmiges Design der beiden Kammern 3, 4, wobei gleichzeitig jeweils eine planare Fläche vorgesehen ist, nämlich die erste Wand 31 und die zweite Wand 41, auf welcher die beiden Ultraschallwandler 5, 6 so angeordnet werden können, dass die Hauptausbreitungsrichtung der von ihnen ausgesendeten Ultraschallsignale in bzw. entgegengesetzt zu der Strömungsrichtung A ist.

Ferner ist die Messröhre 2 einschliesslich der beiden Kammern 3 und 4 vorzugsweise symmetrisch bezüglich der Mittelachse M ausgestaltet. Falls die Messröhre 2 - wie in Fig. 7 dargestellt - zylindrisch ausgestaltet ist, so ist die Messröhre 2 einschliesslich der beiden Kammern 3 und 4 vorzugsweise rotationsymmetrisch bezüglich der Mittelachse M.

Bei dem fünften Ausführungsbeispiel ist die Messröhre 2 so ausgestaltet, dass sie vom Einlass 22 bis zum Auslass 23 einen zumindest näherungsweise konstanten Strömungsquerschnitt für das Fluid hat, damit das Fluid die Messröhre 2 mit konstanter Geschwindigkeit durchströmt.

Dazu weist die Messröhre 2 im Bereich der ersten Kammer 3 eine erste Ausbuchtung 26 und im Bereich der zweiten Kammer 4 eine zweite Ausbuchtung 27 auf, durch welche das Fluid um die jeweilige Kammer 3 bzw. 4 herum strömen kann.

Im Bereich der ersten Kammer 3 begrenzt die erste Kammer 3 zusammen mit der ersten Ausbuchtung 26 der Wandung 21 der Messröhre 2 zwei erste Teilkanäle 35, die sich um dir erste Kammer 3 herum erstrecken. Der Gesamtstrom des Fluids, welcher in Fig. 6 durch den Pfeil mit dem Bezugszeichen G am Einlass 22 der Messröhre 2 dargestellt ist, wird durch das erste Flussleitelement 51 aufgeteilt in die beiden Teilströme S1 und S2, von denen einer durch den darstellungsgemäss oberen ersten Teilkanal 35 um die erste Kammer 3 herum strömt, und der andere durch den darstellungsgemäss unteren ersten Teilkanal 35 um die erste Kammer 3 herum strömt. Stromabwärts der ersten Kammer 3 werden die beiden Teilströme S1 und S2 durch die erste Ausbuchtung 26 in der Wandung 21 der Messröhre 2 wieder zusammengeführt.

Im Bereich der zweiten Kammer 4 begrenzt die erste Kammer 4 zusammen mit der zweiten Ausbuchtung 27 der Wandung 21 der Messröhre 2 zwei zweite Teilkanäle 45, die sich um dir zweite Kammer 4 herum erstrecken. Der Fluidstrom wird durch die zweite Wand 41 der zweiten Kammer 4 wieder aufgeteilt in die beiden Teilströme S1 und S2, von denen einer durch den darstellungsgemäss oberen zweiten Teilkanal 45 um die zweite Kammer 4 herum strömt, und der andere durch den darstellungsgemäss unteren zweiten Teilkanal 45 um die zweite Kammer 4 herum strömt. Stromabwärts der zweiten Kammer 4 werden die beiden Teilströme S1 und S2 durch das zweite Flussleitelement 52 und die zweite Ausbuchtung 27 in der Wandung 21 der Messröhre 2 wieder zusammengeführt. Der Gesamtstrom des Fluids strömt dann durch den Auslass 23 aus der Messröhre 2 heraus, wie das in Fig. 6 durch den Pfeil mit dem Bezugszeichen G am Auslass 23 dargestellt ist.

Wie bereits erwähnt, ist die Messröhre 2 so ausgestaltet, dass sie zwischen dem Einlass 22 und dem Auslass 23 einen konstanten Strömungsquerschnitt aufweist. Das bedeutet, dass die Querschnittsfläche für die Fluidströmung am Einlass der Messröhre 2 so gross ist wie die Summe der Querschnittsflächen der beiden ersten Teilkanäle 35, und so gross ist wie die Summe der Querschnittsflächen der beiden zweiten Teilkanäle 45, und so gross ist wie die Querschnittsfläche am Auslass 23 der Messröhre 2, sodass die Messröhre 2 über ihre gesamte Länge vom Einlass 22 bis zum Auslass 23 einen konstanten Strömungsquerschnitt für das Fluid aufweist.

Vorzugsweise haben alle vier Teilkanäle, nämlich die beiden ersten Teilkanäle 35 und die beiden zweiten Teilkanäle 45, jeweils den gleichen Strömungsquerschnitt, d.h. alle vier Teilkanäle 35, 45 haben die gleiche Querschnittsfläche.

Durch diese hohe Symmetrie in Verbindung mit dem stromlinienförmigen, insbesondere tropfenförmigen Profil sowohl der ersten Kammer 3 als auch der zweiten Kammer 4 lassen sich ganz besonders günstige Strömungsbedingungen in der Messröhre 2 erzielen. Das Fluid strömt mit konstanter Strömungsgeschwindigkeit und mit nur sehr sanften Ablenkungen von der Geradlinigkeit durch die gesamte Messröhre 2. Damit lässt sich insbesondere auf der Messstrecke 7 zwischen den beiden Ultraschallwandlern 5, 6 eine Strömung des Fluids erzielen, die im Wesentlichen frei von Turbulenzen oder Turbulenzzonen ist. Ferner lassen sich unerwünschte Stagnationsbereiche oder Ablagerungen oder Koagulationen des Fluids zumindest deutlich reduzieren.

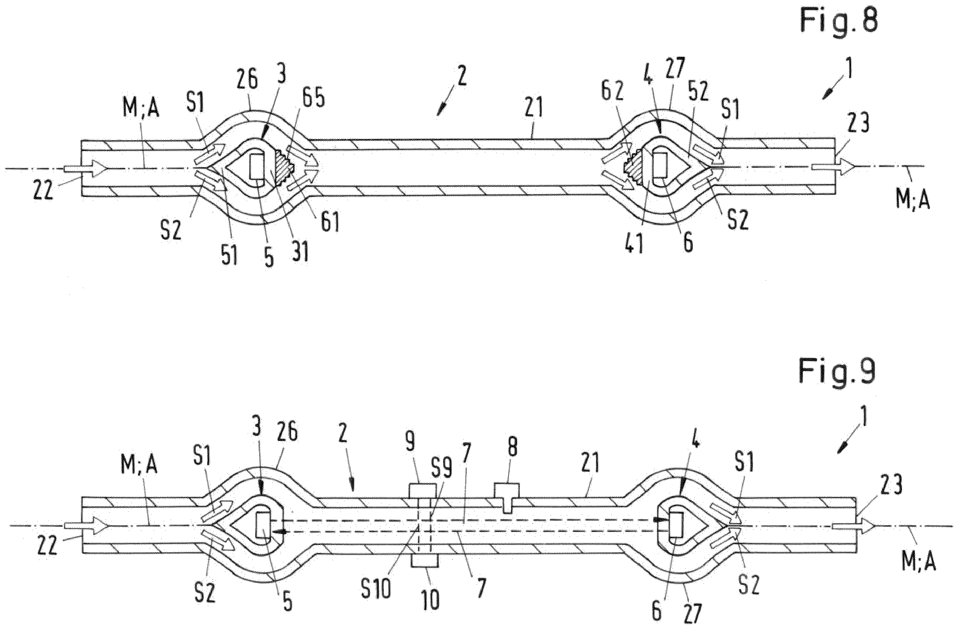

Fig. 8 zeigt in einer schematischen Schnittdarstellung eine erste Variante des fünften Ausführungsbeispiels der erfindungsgemässen Ultraschall-Messvorrichtung 1. Bei dieser ersten Variante sind in sinngemäss gleicher Weise wie dies im Zusammenhang mit dem vierten Ausführungsbeispiel erläutert wurde, die beiden akustischen Linsen 61, 62 zum Fokussieren bzw. zum Parallelisieren der Ultraschallsignale vorgesehen.

Die erste akustische Linse 61 ist vorzugsweise aussenliegend an der ersten Wand 31 der ersten Kammer 3 angeordnet, und die zweite akustische Linse 62 ist vorzugsweise aussenliegend an der zweiten Wand 41 der zweiten Kammer 4 angeordnet. Beide akustischen Linsen 61 und 62 können in an sich bekannter Weise so ausgestaltet sein, dass sie die ausgesendeten Ultraschallsignale fokussieren oder parallelisieren und die zu empfangenden Ultraschallsignale auf den jeweiligen Ultraschallwandler 5, 6 lenken.

Bei der hier beschriebenen ersten Variante des fünften Ausführungsbeispiels sind die beiden akustischen Linsen 61, 62 jeweils derart wie in Fig. 5 dargestellt und im Zusammenhang mit Fig. 5 erläutert ausgestaltet und angeordnet.

Fig. 9 zeigt in einer schematischen Schnittdarstellung eine zweite Variante des fünften Ausführungsbeispiels der erfindungsgemässen Ultraschall-Messvorrichtung 1. Bei dieser zweiten Variante ist zusätzlich noch ein Temperatursensor 8 zum Bestimmen der Temperatur des Fluids vorgesehen. Der Temperatursensor 8 ist hier an oder in der Wandung 21 der Messröhre 2 und bezüglich der Strömungsrichtung A zwischen den beiden Kammern 3, 4 angeordnet. Der Temperatursensor 8 kann mit der Kontrolleinrichtung und mit der Auswerteeinheit signalverbunden sein.

Eine Möglichkeit der Anordnung des Temperatursensors 8 besteht darin, dass in der Wandung 21 ein durchgängiges Loch vorgesehen wird, beispielsweise eine Bohrung, und der Temperatursensor 8 so in diesem Loch angeordnet wird, dass der Temperatursensor 8 direkt in das Fluid eintaucht, also direkten körperlichen Kontakt mit dem Fluid hat. Wenn es sich bei dem Fluid um eine biologische Substanz handelt, dann sollte der mit dem Fluid in Kontakt kommende Teil des Temperatursensors 8 aus einem Material bestehen, welches das Fluid nicht kontaminiert oder sonst wie negativ beeinflusst. Ein geeignetes Material ist beispielsweise ein rostfreier Stahl. Falls das Fluid ein biologisches Material ist oder enthält, sollte die Durchführung, wo der Temperatursensor 8 die Wandung 21 durchdringt, biokompatibel abgedichtet sein.

Eine andere Möglichkeit besteht darin, dass man einen direkten körperlichen Kontakt zwischen dem Fluid und dem Temperatursensor 8 vermeidet, beispielsweise, indem man den Temperatursensor 8 aussen an der Wandung 21 vorsieht. Der durch die Wandung 21 verursachte Unterschied zwischen der realen Temperatur des Fluids und der vom Temperatursensor 8 ermittelten Temperatur kann beispielsweise durch Eichmessungen bestimmt werden, sodass anschliessend aus der vom Temperatursensor 8 ermittelten Temperatur die Temperatur des Fluids in der Messröhre 2 bestimmt werden kann. Hierbei kann es vorteilhaft sein, an der Aussenseite der Wandung 21 eine Ausnehmung vorzusehen, sodass die Wandung 21 dort eine kleinere Dicke aufweist. Der Temperatursensor 8 kann dann in dieser Ausnehmung angeordnet werden und aufgrund der dort dünneren Wandung eine Temperatur messen, die deutlich näher an der Temperatur des in der Messröhre 2 strömenden Fluids liegt.

Einen direkten körperlichen Kontakt zwischen dem Temperatursensor 8 und dem Fluid in der Messröhre 2 zu vermeiden, kann insbesondere bei solchen Anwendungen vorteilhaft sein, bei denen sehr hohe Anforderungen an die Reinheit des Fluids gestellt werden und der Kontakt mit dem Temperatursensor 8 ein Kontaminationsrisiko darstellt. Auch bei sehr aggressiven Fluiden in der Messröhre 2, beispielsweise bei Säuren wie sie in der Halbleiterindustrie eingesetzt werden, kann es vorteilhaft sein, einen direkten körperlichen Kontakt zwischen dem Temperatursensor 8 und dem Fluid in der Messröhre 2 zu vermeiden.

Ferner kann es Anwendungen geben, bei denen sich die Durchführung durch welche der Temperatursensor in die Messröhre hineinreicht, nicht oder nur mit hohem Aufwand in der gewünschten Weise, beispielsweise biokompatibel, abdichten lässt. Auch für solche Anwendungen ist eine Ausgestaltung bevorzugt, bei welcher ein direkter körperlicher Kontakt zwischen dem in der Messröhre 2 strömenden Fluid und dem Temperatursensor 8 vermieden wird.

Die Temperatur des in der Messröhre 2 strömenden Fluids mit Hilfe des Temperatursensors 8 zu ermitteln, hat den Vorteil, dass bei einer Durchflussmessung temperaturabhängige Effekte kompensiert werden können.

Als weitere Massnahme, welche natürlich auch unabhängig von dem Temperatursensor 8, also ohne den Temperatursensor 8, realisiert sein kann, ist bei der zweiten Variante des fünften Ausführungsbeispiels an der Messröhre 2 ein dritter Ultraschallwandler 9 und ein vierter Ultraschallwandler 10 vorgesehen. Der dritte und der vierte Ultraschallwandler 9, 10 sind jeweils aussen an der Wandung 21 der Messröhre 2 angeordnet und so ausgerichtet, dass sie jeweils ein Ultraschallsignal senkrecht zur Strömungsrichtung A aussenden und empfangen können. In Fig. 9 ist das von dem dritten Ultraschallwandler 9 ausgesendete Ultraschallsignal durch den gestrichelten Pfeil mit dem Bezugszeichen S9 dargestellt, und das von dem vierten Ultraschallwandler 10 ausgesendete Signal ist durch den gestrichelten Pfeil mit dem Bezugszeichen S10 dargestellt. Der dritte Ultraschallwandler 9 und der vierte Ultraschallwandler S10 sind sich gegenüberliegend an der Wandung 21 angeordnet, sodass der vierte Ultraschallwandler 10 ein von dem dritten Ultraschallwandler 9 senkrecht zur Strömungsrichtung A ausgesendetes Signal S9 empfangen kann, und umgekehrt der dritte Ultraschallwandler 9 ein von dem vierten Ultraschallwandler 10 senkrecht zur Strömungsrichtung A ausgesendetes Signal S10 empfangen kann.

Es versteht sich, dass auch der dritte Ultraschallwandler 9 und der vierte Ultraschallwandler 10 mit der Kontrolleinrichtung bzw. mit der Auswerteeinheit signalverbunden sein können.

Die Auswerteeinheit erhält somit neben den Messsignalen, die in der Strömungsrichtung A und entgegen der Strömungsrichtung A durch das strömende Fluid gelaufen sind, auch noch solche Messsignale, welche das Fluid senkrecht zur Strömungsrichtung A durchlaufen haben. Die Auswerteeinheit kann dann diese Messsignale, welche das Fluid senkrecht zur Strömungsrichtung A durchlaufen haben, bezüglich ihrer Laufzeit durch das Fluid, bezüglich ihrer Dämpfung durch das Fluid oder natürlich auch bezüglich Laufzeit und Dämpfung analysieren bzw. auswerten.

Da die von dem dritten und vierten Ultraschallwandler 9 und 10 ausgesendeten bzw. empfangenen Messsignale das Fluid jeweils senkrecht zu der Strömungsrichtung A durchlaufen haben, sind ihre jeweiligen Laufzeiten durch das Fluid und ihre jeweiligen Dämpfungen durch das Fluid unabhängig von der Strömungsgeschwindigkeit, mit welcher das Fluid durch die Messröhre 2 strömt. Daher können anhand dieser Messsignale die Schallausbreitungseigenschaften in dem Fluid ermittelt werden, und zwar unabhängig von der Strömungsgeschwindigkeit des Fluids.

Somit kann anhand der senkrecht zur Strömungsrichtung A ausgesendeten Messsignale mindestens eine Kenngrösse des Fluids ermittelt werden, welche von der Schallgeschwindigkeit oder der Schalldämpfung in dem Fluid abhängig ist. Solche Kenngrössen sind beispielsweise die Viskosität des Fluids, das Auftreten von Luft- oder Gasblasen, die Konzentration von Komponenten in dem Fluid, beispielsweise die Methanol Konzentration, oder der Feststoffanteil in einer Suspension, oder die Zellendichte in einem biologischen Fluid.

Insbesondere können anhand dieser das Fluid senkrecht zu seiner Strömungsrichtung A durchlaufenden Messsignale auch Änderungen in dem Fluid, insbesondere Änderungen in seiner Zusammensetzung, detektiert werden, beispielsweise die Zunahme oder die Abnahme der Konzentration oder der Dichte einer Komponente. Daher eignet sich diese Ultraschall-Messvorrichtung 1 insbesondere auch für die Prozessüberwachung, beispielsweise in pharmazeutischen oder biologischen Prozessen oder für die Regelung solcher Prozesse. So kann beispielsweise die Zelldichte, die Protein Konzentration, die Salzkonzentration, die Nährlösungskonzentration, die Zuckerkonzentration oder die Methanol Konzentration in einem Prozess überwacht und geregelt werden. Wird mittels der Ultraschall-Messvorrichtung 1 eine Änderung in einer Kenngrösse detektiert, so können durch einen entsprechend ausgestalteten Regelkreis Korrekturmassnahmen eingeleitet werden, um die Kenngrösse wieder auf ihren Sollwert zu führen.

Dadurch, dass mit dem dritten und dem vierten Ultraschallwandler 9 bzw. 10 insbesondere auch die Viskosität des in der Messröhre strömenden Fluids ermittelbar ist, besteht die Möglichkeit bei einer Durchflussmessung Änderungen in der Viskosität des Fluids zu erkennen, zu bestimmen oder auch zu kompensieren.

Es versteht sich, dass die im Zusammenhang mit den verschiedenen Ausführungsbeispielen beschriebenen Massnahmen natürlich auch miteinander kombinieren lassen, und nicht auf das jeweilige spezifische Ausführungsbeispiel beschränkt sind. Im Folgenden werden nun noch Erläuterungen gegeben, welche sich auf die erfindungsgemässe Ultraschall-Messvorrichtung 1 im Allgemeinen beziehen, also insbesondere auch auf alle Ausführungsbeispiele und ihre Varianten.

Die Messröhre 2 und die Kammern 3 bzw. 4 sind diejenigen Komponenten der Ultraschall-Messvorrichtung 1, die im Betriebszustand mit dem Fluid in Kontakt kommen. Daher werden die Werkstoffe, aus denen die Messröhre 2 und die beiden Kammern 3 und 4 gefertigt werden, nach dem Anwendungsfall ausgesucht. Bevorzugt bestehen die Messröhre 2 und die Kammern 3, 4 aus einem Kunststoff.

Ein wesentliches Kriterium für die Auswahl eines geeigneten Werkstoffes ist es beispielsweise, ob das Fluid ein hochreines Fluid ist, dessen Kontamination verhindert werden soll. Ein weiteres Kriterium ist es, ob das Fluid ein biologisches Fluid ist, welches nur mit biokompatiblen Werkstoffen in Kontakt kommen soll. Ferner ist es ein Kriterium, ob besondere Anforderungen an die Resistenz der Messröhre 2 und der Kammern 3, 4 gegenüber dem Fluid gestellt werden sollen. Werden beispielsweise chemisch aggressive Fluide, z. B. Säuren, durch die Messröhre 2 geleitet, so sollte ein Werkstoff für die Messröhre 2 und die Kammern 3, 4 gewählt werden, der eine gute Resistenz gegenüber aggressiven Fluiden aufweist. Solche aggressiven Fluide sind beispielsweise Fluide, die Säuren enthalten, oder auch die als Slurry bezeichneten hoch abrasiven Aufschlämmungen. Derartige Fluide werden beispielsweise in der Halbleiterindustrie verwendet.

Insbesondere für Anwendungen mit biologischen Fluiden oder hochreinen Fluiden oder biotechnologischen Fluiden oder für sterile Anwendungen können die Messröhre 2 und die Kammern 3, 4 beispielsweise aus einem Kunststoff gefertigt werden, welcher die diesbezüglichen Richtlinien der FDA (Federal Drug Administration) erfüllt, z.B. PolyPropylene (PP), PolyEthylene (PE), PolyTetraFluorEthylene (PTFE), PerFluoroAlkoxy (PFA), Ethylen-TetraFluorEthylen-Copolymer (ETFE), Ethylene ChloroTriFluoroEthylene (ECTFE), PolyCarbonate (PC), FluorEthylenPropylen (FEP), PolyChlorTriFluorEthylen (PCTFE), mit Glycol modifiziertes PolyEthylenTerephthalat (PETG), PolyEtherEtherKeton (PEEK). Diese Kunststoffe können natürlich auch in andere Anwendungen für die Messröhre 2 und die Kammern 3, 4 verwendet werden.

Für viele Anwendungen ist es auch bevorzugt, dass die Ultraschall-Messvorrichtung 1 oder zumindest die mit dem Fluid in Kontakt kommenden Komponenten, nämlich die Messröhre 2 sowie die beiden Kammern 3, 4, als Einmalteile für den Einmalgebrauch (single use) ausgestaltet sind.

Die Ausgestaltung als Einmalteil oder mit Einmalteilen ist insbesondere auch für solche Anwendungen geeignet, bei denen ein sehr hohes Mass an die Reinheit oder die Sterilität derjenigen Komponenten wesentlich ist, die mit dem Fluid in Kontakt kommen. Ein wichtiger Aspekt bezüglich Einmalteilen ist es, dass diese Einmalteile möglichst wirtschaftlich und kostengünstig gefertigt werden können. Hierbei wird insbesondere auch Wert auf preisgünstige, einfache Ausgangsmaterialien, wie beispielsweise handelsübliche Kunststoffe, gelegt. Auch ein umweltbewusster Umgang sowie eine verantwortungsvolle Nutzung der zur Verfügung stehenden Ressourcen sind wesentliche Aspekte bei der Konzeption von Einmalteilen.

Mit dem Begriff ""Einmal" in Zusammensetzungen wie z. B. Einmalteil, Einmalkomponente usw. sind dabei solche Komponenten bzw. Teile gemeint, die für den Einmalgebrauch ausgestaltet sind, die also bestimmungsgemäss nur ein einziges Mal benutzt werden können und dann entsorgt werden. Für eine neue Anwendung muss dann ein neues, bisher unbenutztes Einmalteil eingesetzt werden. Bei der Konzipierung bzw. der Ausgestaltung der Einmalteile sind es daher wesentliche Aspekte, dass die Einmalteile, z.B. die Messröhre 2, die erste Kammer 3 und die zweite Kammer 4, möglichst einfach und wirtschaftlich herstellbar sind, wenige Kosten verursachen und aus möglichst preisgünstig erhältlichen Materialen herstellbar sind. Ein anderer Aspekt ist es, dass die Einmalteile in möglichst einfacher Weise mit anderen Komponenten, welche für den Mehrfachgebrauch ausgelegt sind, also wiederverwendbar sind, zusammenfügbar sind. Die Einmalteile sollen also in sehr einfacher Weise ersetzt werden können, ohne dass dafür ein hoher Montageaufwand notwendig ist. Auch ist es ein wichtiger Aspekt, dass die Einmalteile nach ihrem Gebrauch möglichst einfach zu entsorgen sind. Daher werden solche Materialien für die Einmalteile bevorzugt, die eine möglichst geringe Umweltbelastung, insbesondere auch bei der Entsorgung mit sich bringen.

Noch ein weiterer Aspekt ist es, dass die Einmalteile für gewisse Anwendungsbereiche sterilisierbar sein sollen. Dabei ist es besonders vorteilhaft, wenn die Einmalteile 2, 3, 4 gamma-sterilisierbar sind. Bei dieser Art der Sterilisierung wird das zu sterilisierende Element mit Gamma-Strahlung beaufschlagt. Der Vorteil der Gamma-Sterilisierung, beispielsweise im Vergleich zur Dampfsterilisierung, liegt insbesondere darin, dass die Sterilisierung auch durch die Verpackung hindurch erfolgen kann. Gerade bei Einmalteilen ist es eine gängige Praxis, dass die Teile nach ihrer Herstellung in die Verpackung gebracht werden und dann noch eine Zeit lagern, bevor sie an den Kunden ausgeliefert werden. In solchen Fällen erfolgt die Sterilisierung durch die Verpackung hindurch, was bei einer Dampfsterilisierung oder anderen Verfahren nicht möglich ist.

Die Einmalteile bieten andererseits durch ihre nur einmalige Verwendbarkeit den grossen Vorteil, dass man bei der Konstruktion keinen Wert auf eine gute Reinigbarkeit der Einmalteile legen muss, weil die Einmalteile bei bestimmungsgemässem Gebrauch nicht gereinigt werden müssen. Ferner ist es in der Regel nicht notwendig, dass die Einmalteile 2, 3, 4 mehr als einmal sterilisierbar sein müssen. Dies ist insbesondere bei der Gamma-Sterilisierung ein grosser Vorteil, weil die Beaufschlagung mit Gamma-Strahlung bei Kunststoffen zu Degradationen führen kann, sodass eine mehrfache Gamma-Sterilisierung den Kunststoff unbrauchbar machen kann.

Da in der Regel bei Einmalteilen auf eine Sterilisierung unter hohen Temperaturen und /oder unter hohem (Dampf-) Druck verzichtet werden kann, können kostengünstigere Kunststoffe eingesetzt werden, beispielsweise solche, die keine hohen Temperaturen aushalten, oder die nicht mehrfach hohen Temperatur- und Druckwerten ausgesetzt werden können.

Unter Berücksichtigung all dieser Aspekte ist es daher bevorzugt, insbesondere für die Herstellung der Einmalteile solche Kunststoffe zu verwenden, die zumindest einmal gamma-sterilisierbar sind. Die Materialien sollten dabei gammastabil für eine Dosis von mindestens 40 kGy sein, um eine einmalige Gamma-Sterilisierung zu ermöglichen. Bei der Gamma-Sterilisierung sollten zudem keine giftigen Stoffe entstehen. Zudem ist es bevorzugt, wenn alle Materialien, die mit den zu mischenden bzw. den durchmischten Substanzen in Berührung kommen, USP Class VI Standards erfüllen.

Für die Herstellung der Einmalteile 2, 3, 4 , die mit dem Fluid in Kontakt kommen, sind beispielsweise folgende Kunststoffe bevorzugt: PolyEthylene (PE), Low Density PolyEthylene (LDPE), Ultra Low Density PolyEthylene (ULDPE), Ethylene Vinyl Acetate (EVA), PolyEthylene Terephthalate (PET), PolyVinylChlorid (PVC), PolyPropylene (PP), PolyUrethan (PU), Silicone, PolyVinyliDene Fluoride (PVDF), Acrylonitrile Butadiene Styrene (ABS), Polyacryl, PolyCarbonate (PC), PolyEtherEtherKeton (PEEK).

Für Anwendungen, bei denen die Einmalteile 2, 3, 4 gamma-sterilisierbar sein sollen, sind beispielsweise die unter dem Markennamen Teflon bekannten Materialien Polytetrafluoroethylene (PTFE) und und Perfluoralkoxy-Polymere (PFA) weniger geeignet oder sogar ungeeignet. Bei diesen Materialien besteht nämlich bei der Gamma-Sterilisierung die Gefahr, dass gefährliche Gase austreten, wie beispielsweise Fluor, das dann giftige oder schädliche Verbindungen wie Flusssäure (HF) bilden kann.

Auch ist es bevorzugt, wenn die aus Kunststoff bestehenden Komponenten mittels eines Spritzgiessverfahrens herstellbar sind, weil dies eine besonders kostengünstige Art der Herstellung ist.

Durch die Erfindung wird ferner ein Verfahren zur Herstellung einer erfindungsgemässen Ultraschall-Messvorrichtung 1 vorgeschlagen, das dadurch gekennzeichnet ist, dass die Messröhre 2, die erste Kammer 3 und die zweite Kammer 4 aus einem Kunststoff hergestellt werden.

Anhand der Fig. 10-14 werden verschiedene bevorzugte Varianten des erfindungsgemässen Verfahrens erläutert, wobei primär auf die Herstellung des fünften Ausführungsbeispiels der erfindungsgemässen Ultraschall-Messvorrichtung 1 Bezug genommen wird. Natürlich sind diese Verfahren bzw. Varianten in sinngemäss gleicher Weise auch für die Herstellung der anderen Ausführungsbeispiele geeignet.

Vorzugsweise werden die Messröhre 2, die erste Kammer 3 und die zweite Kammer 4 in einem Spritzgiessverfahren hergestellt. Dazu ist der Kunststoff, aus welchem die Messröhre 2 und die beiden Kammern 3, 4 geformt werden, vorzugsweise ein thermoplastischer Kunststoff.

Gemäss der in Fig. 10 dargestellten Ausführungsform werden die Messröhre 2, die erste Kammer 3 und die zweite Kammer 4 als einstückiges Teil hergestellt. Hierfür geeignet ist beispielsweise ein Blassformverfahren (blow molding), was ein Sonderverfahren des Spritzgiessens ist. Bei diesem Verfahren wird zunächst durch konventionelles Spritzgiessen ein Formling hergestellt. Dieser wird dann aufgeheizt, in das Werkzeug eingebracht und durch Beaufschlagung mit Gas oder Luft in die endgültige, durch das Werkzeug vorgegebene Form aufgeblasen.

Bei den in den Fig. 11-14 dargestellten Varianten wird die Einheit aus Messröhre 2, erster Kammer 3 und zweiter Kammer 4 aus mehreren vorzugsweise jeweils spritzgegossenen Einzelteilen zusammengefügt. Dabei werden jeweils die Einzelteile in Spritzgiessverfahren hergestellt und anschliessend zusammengefügt, vorzugsweise durch einen Schweissprozess.

In den Fig. 11-14 sind die Messröhre 2, die erste Kammer 3 und die zweite Kammer 4 jeweils in einer Explosionsdarstellung gezeigt, welche jeweils die separaten Einzelteile zeigt, die mittels Spritzgiessens hergestellt und dann zu der Einheit aus Messröhre 2, erster Kammer 3 und zweiter Kammer 4 zusammengefügt werden.

Bei der in Fig. 11 gezeigten Variante sind vier Einzelteile 101, 102, 103 und 104 vorgesehen, von denen jedes Y-förmig ausgestaltet ist. Das erste Einzelteil 101 erstreckt sich vom Einlass 22 bis zu einem ersten Schnitt, der senkrecht zur Mittelachse M und mitten durch die erste Kammer 3 erfolgt. Das zweite Einzelteil 102 erstreckt sich von diesem ersten Schnitt bis zu einem zweiten Schnitt, der senkrecht zur Mittelachse M und in der Mitte zwischen der ersten Kammer und der zweiten Kammer erfolgt. Das dritte Einzelteil erstreckt sich von diesem zweiten Schnitt bis zu einem dritten Schnitt, der senkrecht zur Mittelachse M und mitten durch die zweite Kammer 4 erfolgt. Das vierte Einzelteil 104 erstreckt sich von diesem dritten Schnitt bis zum Auslass 23 der Messröhre 2. Vorzugsweise sind dabei das erste Einzelteil 101 und das vierte Einzelteil 104 identisch ausgestaltet, und das zweite Einzelteil 102 und das dritte Einzelteil 103 sind ebenfalls identisch ausgestaltet. Dadurch benötigt man nur zwei verschiedene Werkzeuge für das Spritzgiessen der Einzelteile 101, 102, 103 und 104. Es bedarf dann dreier Fügeprozesse, vorzugsweise Schweissprozesse, um die vier Einzelteile 101-104 zusammenzufügen.

Bei der in Fig. 12 dargestellten Variant sind vier Einzelteile 201, 202, 203, 204 vorgesehen, nämlich ein Eingangsteil 201, welches den Einlass 22 umfasst, ein Ausgangsteil 204, welches den Auslass 23 umfasst, ein Unterteil 202, welches zwischen dem Eingangsteil 201 und dem Ausgangsteil 204 angeordnet und darstellungsgemäss nach oben offen ist, und einen Deckel 203, welcher das Unterteil 202 abdeckt. Das Eingangsteil 201 erstreckt sich vom Einlass 22 bis zu einem ersten Schnitt, der senkrecht zur Mittelachse M und zwischen dem Einlass 22 und der ersten Kammer 3 erfolgt. Das Ausgangsteil 204 erstreckt sich von einem zweiten Schnitt, der senkrecht zur Mittelachse M und zwischen der zweiten Kammer 4 und dem Auslass 23 erfolgt. Das Unterteil 202 und der Deckel 203 erstrecken sich jeweils von dem ersten Schnitt bis zu dem zweiten Schnitt, wobei das Unterteil 202 und der Deckel 203 durch einen Schnitt voneinander getrennt sind, der parallel zur Mittelachse M erfolgt.

Bei dieser Variante sind vorzugsweise das Eingangsteil 201 und das Ausgangsteil identisch ausgestaltet. Dadurch benötigt man nur drei verschiedene Werkzeuge für das Spritzgiessen der Einzelteile 201, 202, 203 und 204. Es bedarf dann dreier Fügeprozesse, vorzugsweise Schweissprozesse, um die vier Einzelteile 201-204 zusammenzufügen.

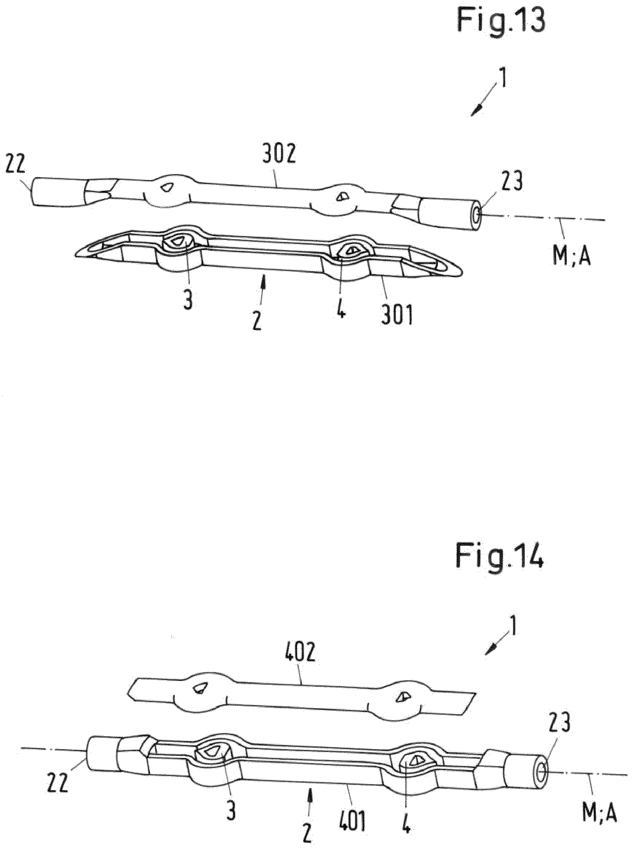

Bei der in Fig. 13 dargestellten Variante sind zwei Einzelteile 301, 302 vorgesehen, nämlich ein Unterteil 301 und ein Deckelteil 302. Das Unterteil 301 ist von dem Deckelteil 302 durch einen Schnitt getrennt, der in einem Bereich, welcher die erste Kammer 3, die zweite Kammer 4 und den dazwischenliegenden Abschnitt der Messröhre 2 umfasst, parallel zur Mittelachse M erfolgt. Eingangsseitig der ersten Kammer 3 und ausgangsseitig der zweiten Kammer 4 verläuft der Schnitt schräg zur Mittelachse M, darstellungsgemäss nach unten, sodass der Einlass 22 und der Auslass 23 jeweils vollständig zum Deckelteil 302 gehören.

Dadurch benötigt man nur zwei verschiedene Werkzeuge für das Spritzgiessen der Einzelteile 301 und 302. Es bedarf dann nur eines Fügeprozesses, vorzugsweise ein Schweissprozess, um die beiden Einzelteile 301 und 302 zusammenzufügen.

Bei der in Fig. 14 dargestellten Variante sind ebenfalls nur zwei Einzelteile 401, 402 vorgesehen, nämlich ein Unterteil 401 und ein Deckelteil 402. Das Unterteil 401 ist von dem Deckelteil 402 durch einen Schnitt getrennt, der im Wesentlichen parallel zur Mittelachse M ist, wobei der Schnitt einerseits zwischen dem Einlass 22 und der ersten Kammer 3 endet und andererseits zwischen der zweiten Kammer 4 und dem Auslass 23, sodass das Unterteil 401 bezüglich der durch die Mittelachse M festgelegten Richtung länger ist als das Deckelteil 402. Somit gehören der Einlass 22 und der Auslass 23 jeweils vollständig zum Unterteil 401.

Auch für diese Variante benötigt man nur zwei verschiedene Werkzeuge für das Spritzgiessen der Einzelteile 401 und 402. Es bedarf dann nur eines Fügeprozesses, vorzugsweise ein Schweissprozess, um die beiden Einzelteile 401 und 402 zusammenzufügen.

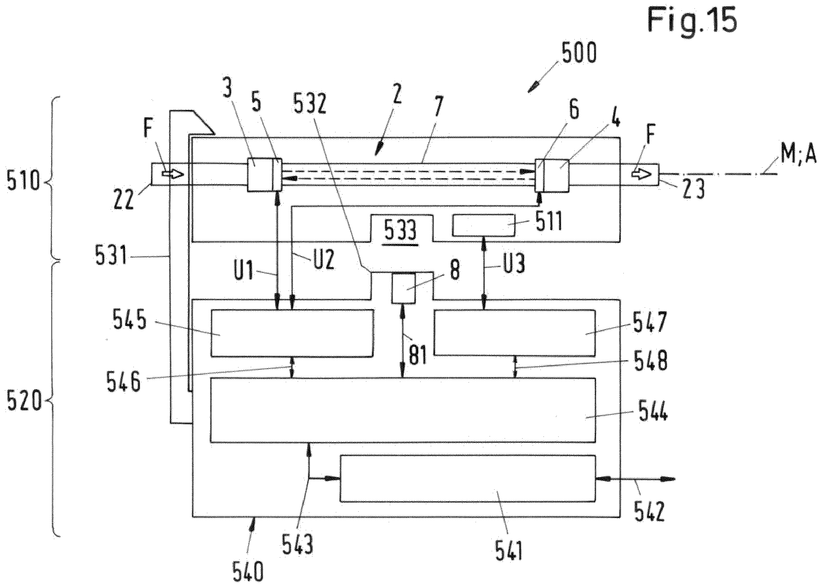

Durch die Erfindung wird ferner ein Ultraschall-Messsystem zur Messung an einem strömenden Fluid vorgeschlagen. Fig. 15 zeigt in einer schematischen Darstellung ein erstes Ausführungsbeispiel eines erfindungsgemässen Ultraschall-Messsystems, das gesamthaft mit dem Bezugszeichen 500 bezeichnet ist.

Das erfindungsgemässe Ultraschall-Messsystem 500 kann insbesondere eine erfindungsgemässe Ultraschall-Messvorrichtung 1 umfassen. Die vorangehenden Erläuterungen bezüglich der Ausführungsbeispiele der erfindungsgemässen Ultraschall-Messvorrichtung 1 und alle ihrer Varianten gelten in gleicher Weise oder in sinngemäss gleicher Weise auch für das erfindungsgemässe Ultraschall-Messsystem 500. Bei dem erfindungsgemässen Ultraschall-Messsystem 500 sind gleiche Teile oder von der Funktion her gleichwertige Teile mit den gleichen Bezugszeichen bezeichnet wie bei den vorangehend beschriebenen Ausführungsbeispielen der Ultraschall-Messvorrichtung 1.

Das erfindungsgemässe Ultraschall- Messsystem 500 umfasst eine Einmalvorrichtung 510, die für den Einmalgebrauch ausgestaltet ist, eine wiederverwendbare Vorrichtung 520, die für den Mehrfachgebrauch ausgestaltet ist, sowie den ersten Ultraschallwandler 5, und den zweiten Ultraschallwandler 6. Bei dem ersten Ausführungsbeispiel sind die beiden Ultraschallwandler 5, 6 Bestandteil der Einmalvorrichtung 510, das heisst, die beiden Ultraschallwandler 5, 6 sind für den Einmalgebrauch konzipiert.

Die Einmalvorrichtung 510 umfasst alle diejenigen Komponenten, die als Einmalteil im vorangehend beschriebenen Sinne konzipiert sind. Dies sind insbesondere die Messröhre 2, die erste Kammer 3, in welcher der erste Ultraschallwandler 5 angeordnet ist, und die zweite Kammer 4, in welcher der zweite Ultraschallwandler 6 angeordnet ist. Die Messröhre 2 weist die Mittelachse M auf, welche die Strömungsrichtung A für das Fluid festlegt. Die Messröhre 2 weist ferner den Einlass 22 und den Auslass 23 für das Fluid auf. Das Fluid ist in Fig. 15 durch die beiden Pfeile F symbolisch dargestellt. Die einander zugewandten Oberflächenflächen der ersten Kammer 3 und der zweiten Kammer 4 begrenzen die geradlinige Messstrecke 7 für das Fluid, welche sich von der ersten Kammer 3 bis zu der zweiten Kammer 4 erstreckt. Die erste Kammer 3 und die zweite Kammer 4 sind so ausgestaltet und angeordnet, dass sie jeweils von dem Fluid umströmbar sind, und dass sich die Messstrecke 7 in der Strömungsrichtung A erstreckt.

Die wiederverwendbare Vorrichtung 520 umfasst die Kontrolleinrichtung 540, welche zum Ansteuern der Ultraschallwandler 5, 6 und zum Empfangen von Signalen von den Ultraschallwandlern 5, 6 ausgestaltet ist, und welche auch die Auswerteeinheit zum Auswerten und Analysieren der von den Ultraschallwandlern 5, 6 empfangenen Signale umfasst.

Die wiederverwendbare Vorrichtung 520 ist lösbar mit der Einmalvorrichtung verbindbar, derart, dass die wiederverwendbare Vorrichtung 520 und die Einmalvorrichtung 510 relativ zueinander fixiert sind. Die Verbindung der Einmalvorrichtung 510 mit der wiederverwendbaren Vorrichtung 520 ist so ausgestaltet, dass sie von Hand und ohne Zuhilfenahme von Werkzeugen lösbar und schliessbar ist.

Bei dem ersten Ausführungsbeispiel des Ultraschall-Messsystems 500 ist mindestens eine mechanische Klemme 531vorgesehen, welche Bestandteil der wiederverwendbaren Vorrichtung 520 ist, und welche in Form einer Schnappverbindung die Einmalvorrichtung 510 übergreifen kann, sodass die Einmalvorrichtung 510 an der wiederverwendbaren Vorrichtung 520 festgeklemmt werden kann. Es können natürlich auch mehrere mechanische Klemmen 531 vorgesehen sein.

Zur Verbindung der Einmalvorrichtung 510 mit der wiederverwendbaren Vorrichtung 520 ist ferner an der wiederverwendbaren Vorrichtung ein Vorsprung vorgesehen 532, welcher beim Zusammensetzen mit der Einmalvorrichtung 510 in eine in der Einmalvorrichtung vorgesehene Ausnehmung 533 eingreift. Dabei sind der Vorsprung 532 und die Ausnehmung 533 vorzugsweise für ein formschlüssiges Zusammenwirken ausgestaltet, sodass die Einmalvorrichtung 510 in einfacher Weise auf die wiederverwendbare Vorrichtung 520 aufsetzbar bzw. von dieser abziehbar ist.

Zum besseren Verständnis zeigt die schematische Darstellung der Fig. 15 die Einmalvorrichtung 510 noch etwas von der wiederverwendbaren Vorrichtung 520 getrennt. Es versteht sich, dass im zusammengesetzten Zustand der Vorsprung 532 in die Ausnehmung 533 eingreift und die Einmalvorrichtung 510 vorzugsweise auf der wiederverwendbaren Vorrichtung 520 aufliegt.

Die Kontrolleinrichtung 540 umfasst eine Versorgungs- und Kommunikationseinheit 541, welcher über eine Signalverbindung 542 Energie zur Versorgung des Ultraschall-Messsystems 500 zuführbar ist. Ferner dient die Versorgungs- und Kommunikationseinheit 541 als Interface zur Kommunikation und zum Datenaustausch mit einem Benutzer. Die Versorgungs- und Kommunikationseinheit 541 ist mit einer zentralen Prozesseinheit 544 signalverbunden, wie dies der Pfeil 543 andeutet. In der zentralen Prozesseinheit 544 werden die Signale zur Ansteuerung der Ultraschallwandler 5, 6 generiert. Die zentrale Prozesseinheit 544 umfasst ferner die Auswerteeinheit zum Auswerten und Analysieren der von den Ultraschallwandlern 5, 6 empfangenen Signale.

Die zentrale Prozesseinheit 544 ist mit einer Analogeinheit 545 signalverbunden, wie dies der Pfeil 546 andeutet. Die Analogeinheit 545 ist über eine erste Signalverbindung U1 mit dem ersten Ultraschallwandler 5 verbunden und über eine zweite Signalverbindung U2 mit dem zweiten Ultraschallwandler U2. Über die Signalverbindungen U1 und U2 werden die Ultraschallwandler 5, 6 angesteuert, und die von den Ultraschallwandlern 5, 6 empfangenen Messsignale in die Kontrolleinrichtung 540 eingespeist.

In der Kontrolleinrichtung 540 ist ferner ein Speicherinterface 547 vorgesehen, welches mit der zentralen Prozesseinheit 540 signalverbunden ist wie dies der Pfeil 548 andeutet. Das Speicherinterface 547 kann ferner über eine dritte Signalverbindung U3 mit einer Speichereinheit 511 kommunizieren, welche in der Einmalvorrichtung 510 vorgesehen ist. In der Speichereinheit 511 sind insbesondere spezifische Kalibrierungsdaten oder Konfigurationsparameter gespeichert, welche spezifisch für die jeweilige Einmalvorrichtung 510 sind. Sobald die Einmalvorrichtung 510 mit der wiederverwendbaren Vorrichtung 520 verbunden ist, kann das Speicherinterface 547 der Kotrolleinrichtung 540 diese spezifischen Kalibrierungsdaten aus der Speichereinheit 511 der jeweiligen Einmalvorrichtung 510 auslesen und an die zentrale Prozesseinheit 544 übermitteln.

In dem Speicherinterface 547 können weitere Informationen gespeichert werden, insbesondere auch solche, die spezifisch für eine bestimmte Einmalvorrichtung 510 sind, beispielsweise die Gebrauchsdauer der Einmalvorrichtung 510 oder ein zeitlicher Temperaturverlauf.

In der Kontrolleinrichtung 540 ist auch der Temperatursensor 8 zum Bestimmen der Temperatur des Fluids vorgesehen. Der Temperatursensor 8 ist in dem Vorsprung 532 vorgesehen, sodass der Temperatursensor 8 nach dem Zusammensetzen der Einmalvorrichtung 510 und der wiederverwendbaren Vorrichtung 520 möglichst nahe an dem Messkanal 7 platziert ist, durch welchen das Fluid strömt. Der Temperatursensor 8 ist mit der zentralen Prozesseinheit 544 signalverbunden, wie dies der Pfeil mit dem Bezugszeichen 81 andeutet.

Aufgrund dieser Ausgestaltung kann die als Einmalteil ausgestaltete Messröhre 2 mit den darin angeordneten Ultraschallwandlern 5, 6 in sehr einfacher Weise und insbesondere ohne Werkzeug an der wiederverwendbaren Vorrichtung 520 fixiert werden. Es sind auch keine weiteren Massnahmen notwendig, weil alle benötigten Kalibrierungsdaten oder Konfigurationsdaten automatisch in die zentrale Prozesseinheit 544 eingespeist werden, sodass das Ultraschall-Messsystem 500 gleich in Betreib genommen werden kann. Besonders vorteilhaft ist dabei auch, dass die kostenintensiven Komponenten, wie beispielsweise die benötigten elektronischen Komponenten in der wiederverwendbaren Vorrichtung 520 integriert sind.

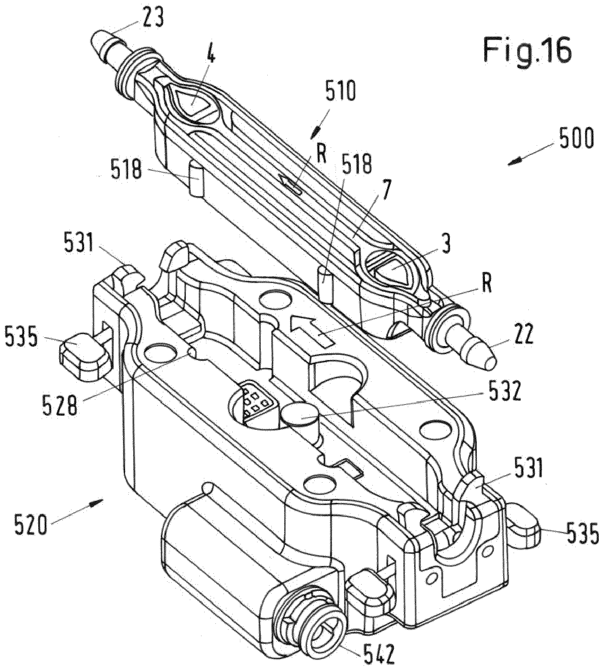

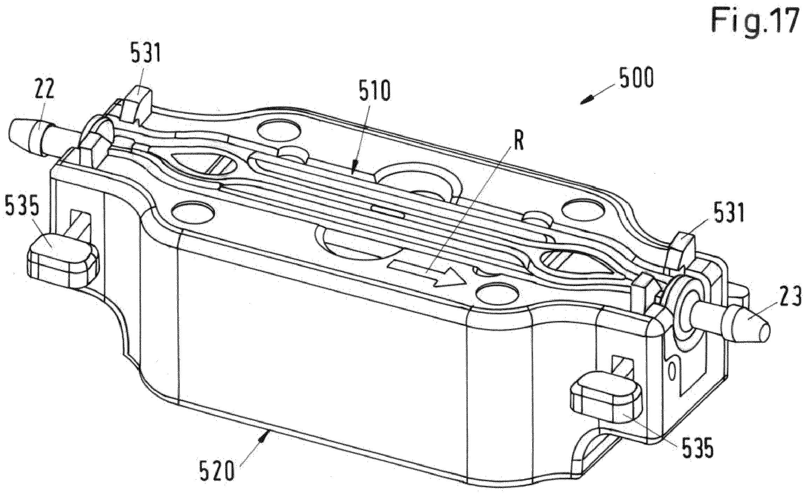

Fig. 16 zeigt in einer perspektivischen Darstellung eine erste Variante des ersten Ausführungsbeispiels des Ultraschall-Messsystems 500, wobei die Einmalvorrichtung 510 noch nicht in die wiederverwendbare Vorrichtung 520 eingesetzt ist. Fig. 17 zeigt die gleiche Variante aus einer anderen Perspektive, wobei die Einmalvorrichtung 510 in die wiederverwendbare Vorrichtung 520 eingesetzt ist.

Bei dieser Variante sind zwei mechanische Klemmen 531 vorgesehen, von denen eine den Einlass 22 der Messröhre 2 in Form einer Schnappverbindung umgreifen kann, und die andere den Auslass 23 der Messröhre 2. Zum Verbinden der Einmalvorrichtung 510 mit der wiederverwendbaren Vorrichtung 520 wird die Einmalvorrichtung 510 in die wiederverwendbare Vorrichtung 520 eingesetzt und angedrückt, sodass der Einlass 22 und der Auslass 23 in die beiden mechanischen Klemmen 531 einschnappen. An jeder mechanischen Klemme 531 ist ferner ein Lösemechanismus 535 vorgesehen. Durch Drücken des jeweiligen Lösemechanismus 535 geben die mechanischen Klemmen 531 die Einmalvorrichtung 510 frei.

Auf der wiederverwendbaren Vorrichtung 520 ist ferner ein Richtungspfeil R vorgesehen, welcher die Strömungsrichtung A des Fluids anzeigt. Ein solcher Richtungspfeil befindet sich auch auf der Einmalvorrichtung 510.

Optional können an der Einmalvorrichtung 510 Führungsnasen (keys) 518 vorgesehen sein, für welche die wiederverwendbare Vorrichtung 520 Nuten 528 aufweist, welche die Führungsnasen 518 aufnehmen. Hierdurch lässt es sich gewährleisten, dass die Einmalvorrichtung 510 nur in genau einer Orientierung in die wiederverwendbare Vorrichtung 520 einsetzbar ist.

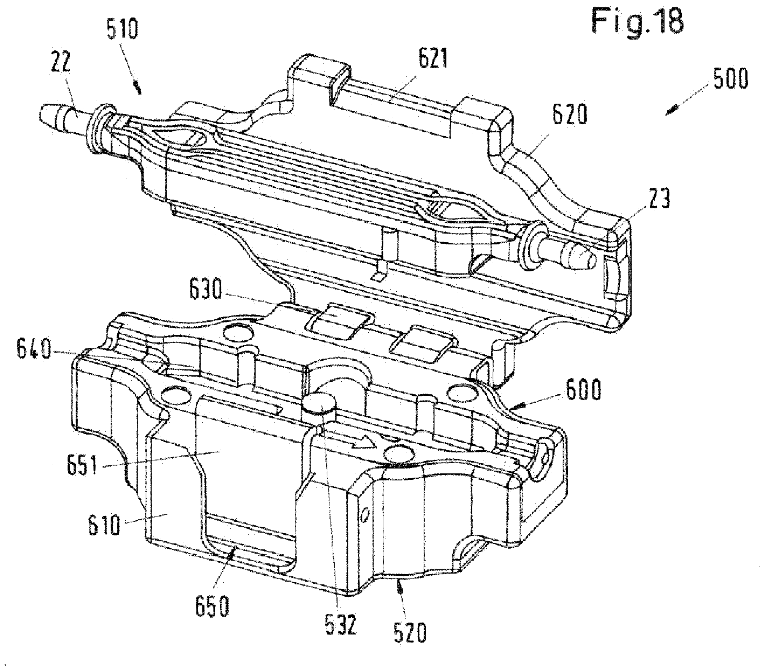

Fig. 18 zeigt in einer perspektivischen Darstellung eine zweite Variante des ersten Ausführungsbeispiels des Ultraschall-Messsystems 500, wobei die Einmalvorrichtung 510 noch nicht in die wiederverwendbare Vorrichtung 520 eingesetzt ist.

Bei dieser zweiten Variante umfasst die wiederverwendbare Vorrichtung 520 ein Gehäuse 600, welches als schliessbares Gehäuse 600 ausgestaltet ist. Das Gehäuse 600 umfasst ein erstes Gehäuseteil 610 sowie ein zweites Gehäuseteil 620, welche über ein Gelenk 630 gelenkig miteinander verbunden sind. Fig. 18 zeigt das Gehäuse 600 im geöffneten Zustand. Die Kontrolleinrichtung 540 ist im ersten Gehäuseteil 610 angeordnet. Das zweite Gehäuseteil 620 dient als Deckel, mit welchem das Gehäuse 600 verschlossen werden kann. Das Gehäuse 600 weist ferner eine durchgängige zentrale Ausnehmung 640 auf, welche sich durch das gesamte Gehäuse 600 erstreckt und zur Aufnahme der Einmalvorrichtung 510 dient.

Das Gehäuse 600 weist ferner einen Verschlussmechanismus 650 auf, um das Gehäuse 600 zu verschliessen und damit in die Ausnehmung 640 eingelegt Einmalvorrichtung 510 bezüglich der wiederverwendbaren Vorrichtung 520 zu fixieren. Der Verschlussmechanismus 650 ist hier am ersten Gehäuseteil 610 angeordnet und umfasst eine Lasche 651, welche für das Zusammenwirken mit einer Aussparung 621 im zweiten Gehäuseteil 620 ausgestaltet ist.

Die Einmalvorrichtung 510 wird in die zentrale Ausnehmung 640 eingelegt, sodass der Vorsprung 532 in die Ausnehmung 533 eingreift. Anschliessend werden die beiden Gehäuseteile 610, 620 zusammengeklappt, d.h. das zweite Gehäuseteil 620 wird über die Einmalvorrichtung 510 geklappt, sodass die Lasche 651 in die Aussparung 621 eingreift und das zweite Gehauseteil 620 übergreift. Dadurch wird das Gehäuse 600 geschlossen und die Einmalvorrichtung 510 bezüglich der wiederverwendbaren Vorrichtung 520 fixiert.

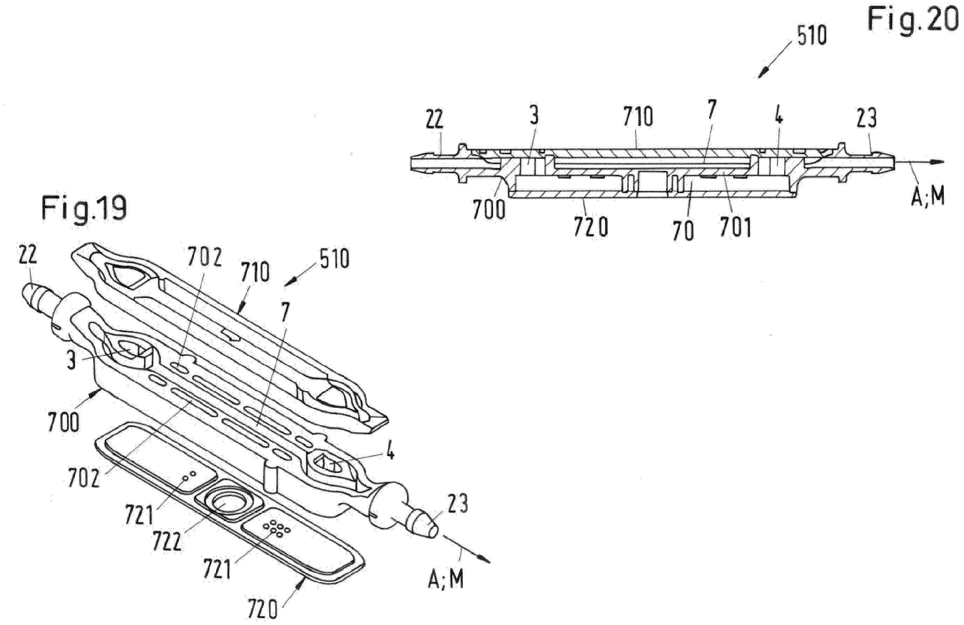

Fig. 19 zeigt ein bevorzugtes Ausführungsbeispiel der Einmalvorrichtung 510 in einer perspektivischen Explosionsdarstellung. Zum besseren Verständnis zeigt Fig. 20 dieses Ausführungsbeispiel noch im zusammengesetzten Zustand und in einer Schnittdarstellung, wobei der Schnitt entlang der Strömungsrichtung A erfolgt.

Bei diesem Ausführungsbeispiel umfasst die Einmalvorrichtung 510, abgesehen von den Ultraschallwandlern 5, 6, drei Teile, nämlich einen Hauptteil 700, einen Deckel 710, sowie einen Boden 720.

Der Hauptteil 710 umfasst den Einlass 22, den Auslass 23, die beiden Kammern 3, 4 sowie den Kanal, welcher die Messstrecke 7 zwischen den beiden Kammern 3, 4 bildet. Der Deckel 710 verschliesst die Einmalvorrichtung 510 auf derjenigen Seite, welche der wiederverwendbaren Vorrichtung 520 abgewandt ist, wenn die Einmalvorrichtung 510 in die wiederverwendbare Vorrichtung 520 eingesetzt ist. Somit kommt der Deckel 710 während des Betriebs mit dem Fluid in Kontakt, weil der Deckel 710 die Messstrecke 7 darstellungsgemäss nach oben abschliesst. Darstellungsgemäss nach unten wird der Kanal, welcher die Messstrecke 7 bildet, von einer Bodenplatte 701 (Fig. 20) begrenzt, welche integraler Bestandteil des Hauptteils 700 ist. Darstellungsgemäss unterhalb der Bodenplatte 701 ist der Boden 720 vorgesehen, welcher die Einmalvorrichtung 510 abschliesst. Wenn die Einmalvorrichtung 510 in die wiederverwendbare Vorrichtung 520 eingesetzt ist, so liegt der Boden 720 auf der wiederverwendbaren Vorrichtung 520 auf. Zwischen der Unterseite des Hauptteils 700, also der Bodenplatte 701, und dem Boden 720 ist ein Hohlraum 70 vorgesehen, welcher die erste Kammer 3 mit der zweiten Kammer 4 verbindet.

Ähnlich wie bei der in Fig. 14 dargestellten Ausführungsform sind der Hauptteil 700 und der Deckel 710 durch einen Schnitt getrennt, der im Wesentlichen parallel zur Mittelachse M ist, wobei der Schnitt einerseits zwischen dem Einlass 22 und der ersten Kammer 3 endet und andererseits zwischen der zweiten Kammer 4 und dem Auslass 23, sodass der Hauptteil 700 bezüglich der durch die Mittelachse M festgelegten Richtung länger ist als der Deckel 710. Somit gehören der Einlass 22 und der Auslass 23 jeweils vollständig zum Hauptteil 700. Im Bereich seiner beiden Enden ist der Deckel 710 jeweils abgeschrägt ausgestaltet. Der Hauptteil 700 umfasst jeweils dazu komplementäre Abschrägungen.

In dem Hauptteil 700 sind ferner mehrere sich jeweils in Strömungsrichtung A erstreckende und lateral zu dem die Messtrecke 7 bildenden Kanal angeordnete Nuten 702 vorgesehen, welche die mechanische Stabilität der Messstrecke 7 erhöhen.

Der Hauptteil 700, der Deckel 710 und der Boden 720 werden jeweils separat hergestellt, vorzugsweise mittels eines Spritzgiessverfahrens und anschliessend in einem Fügeprozess miteinander verbunden. Dabei erfordert insbesondere das Zusammenfügen des Hauptteils 700 mit dem Deckel 710 besondere Sorgfalt, weil diese Verbindung fluiddicht und insbesondere flüssigkeitsdicht ausgestaltet sein muss. Als Verfahren zum Zusammenfügen von Hauptteil 700, Deckel 710 und Boden 720 eignen sich insbesondere Schweissverfahren wie beispielsweise Laserschweissen oder auch Klebeverfahren. Auch sind Verfahren wie Verschrauben möglich.

Ein besonderer Vorteil des hier beschriebenen Ausführungsbeispiels besteht darin, dass der einstückige Hauptteil 700 die gesamten Dimensionen vom Einlass 22 bis zum Auslass 23 umfasst, also insbesondere auch die Kammern 3, 4 und den die Messstrecke 7 bildenden Kanal. Das erhöht die mechanische Stabilität der gesamten Einmalvorrichtung 510 und verhindert Falschausrichtungen.

Im Boden 720 sind elektrische Kontakte 721 vorgesehen, welche zu den Signalverbindungen U1, U2 und U3 gehören, über welche die Einmalvorrichtung 510 und die wiederverwendbare Vorrichtung 520 Signale austauschen, und über welche der Einmalvorrichtung 510 Energie zuführbar ist. Ferner ist im Boden 720 eine Öffnung 722 vorgesehen, welche Bestandteil der Ausnehmung 533 ist.

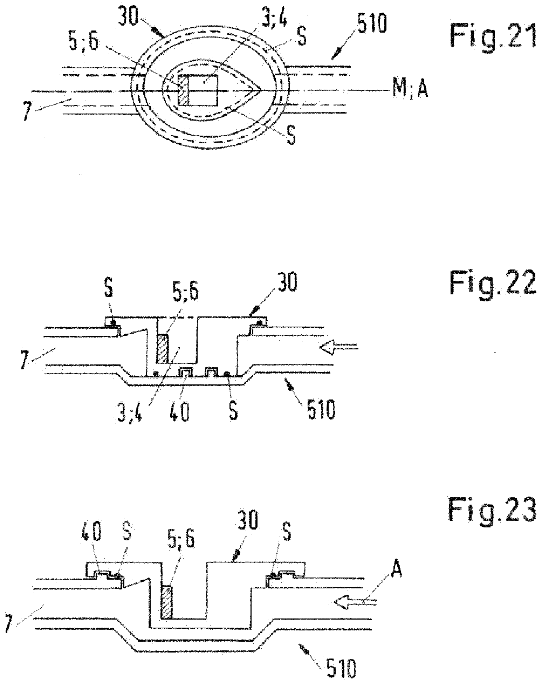

Gemäss einer anderen Ausführungsform sind die erste Kammer 3 und/oder die zweite Kammer 4 jeweils in einem separaten Kammereinsatz 30 vorgesehen. Solche Ausführungsformen sind in den Fig. 21 - Fig. 23 gezeigt. Fig. 21 zeigt eine Aufsicht auf den Kammereinsatz 30, der sowohl für die erste Kammer 3 als auch für die zweite Kammer 4 vorgesehen sein kann. Zum besseren Verständnis zeigt Fig. 22 eine Schnittdarstellung des Kammereinsatzes 30 in einem Schnitt entlang der Strömungsrichtung A.

Der separate Kammereinsatz 30 wird in eine dafür vorgesehene Öffnung eingesetzt und dann mit der Einmalvorrichtung 510 zusammengefügt, vorzugsweise durch einen Schweissprozess, insbesondere mittels Laserschweissens. Die Schweissnähte S sind in den Fig. 21 bis Fig. 23 jeweils durch gestrichelte Linien bzw. durch Punkte S angedeutet. Wie dies insbesondere Fig. 22 zeigt, können Positionierelemente 40 vorgesehen sein, beispielsweise Nuten und darein eingreifende Stifte, sodass der jeweilige Ultraschallwandler 5 bzw. 6 korrekt in Strömungsrichtung A ausgerichtet ist.

Fig. 23 zeigt in einer zu Fig. 22 analogen Darstellung eine Variante für den Kammereinsatz 30, für dessen Befestigung weniger Schweissnähte S benötigt werden.

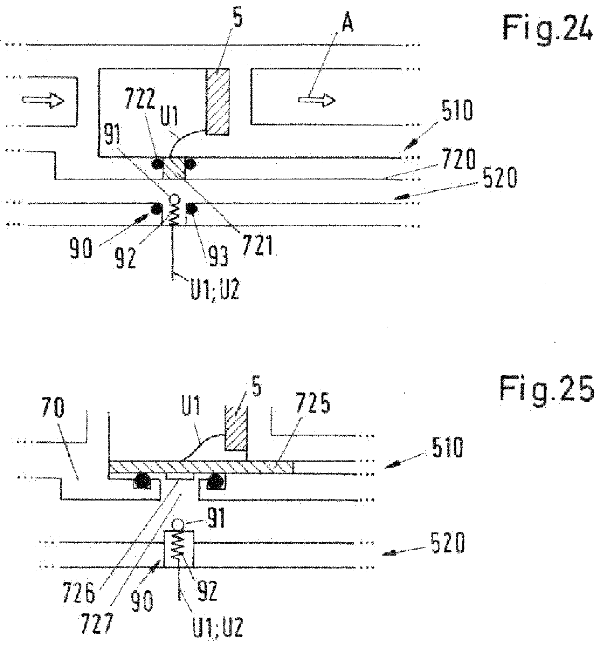

Fig. 24 zeigt eine mögliche Ausführungsform für die Signalverbindungen U1, U2 oder U3, welche eine elektrische Verbindung zwischen der Einmalvorrichtung 510 und der wiederverwendbaren Vorrichtung 520 ermöglichen.

In derjenigen Oberfläche der wiederverwendbaren Vorrichtung 520, welche im zusammengesetzten Zustand der Einmalvorrichtung 510 zugewandt ist, sind einer oder mehrere Federkontakte 90 vorgesehen, welche jeweils einen aus der wiederverwendbaren Vorrichtung 520 herausstehenden leitfähigen Kopf 91 umfassen, welcher durch ein Federelement 92 federbelastet ist. Jeder der Federkontakte ist mittels der Signalverbindungen U1 oder U2 mit der Analogeinheit 545 signalverbunden. Der Kopf 91 ist vorzugsweise aus Gold gefertigt.

Im Boden 720 der Einmalvorrichtung 510 sind die elektrischen Kontakte 721 vorgesehen, welche so angeordnet sind, dass sie im zusammengesetzten Zustand der Einmalvorrichtung 510 und der wiederverwendbaren Vorrichtung 520 auf die Federkontakte 90 drücken und somit eine elektrische Verbindung zwischen der Einmalvorrichtung 510 und der wiederverwendbaren Vorrichtung 520 bilden.

Die elektrischen Kontakte 721 sind jeweils durch ein Dichtungselement 722 beispielsweise einen O-Ring gegen das Austreten des Fluids aus der Einmalvorrichtung 510 geschützt. Die Federkontakte 90 sind jeweils durch ein Dichtungselement 93, beispielsweise einen O-Ring, gegen das Eindringen des Fluids in die wiederverwendbare Vorrichtung 520 geschützt.

Für jeden Ultraschallwandler 5, 6 - in Fig. 24 ist nur der erste Ultraschallwandler 5 dargestellt - sind jeweils zwei elektrische Kontakte 721 vorgesehen, die über die Signalverbindung U1 bzw. U2 mit dem jeweiligen Ultraschallwandler 5 oder 6 verbunden sind. Dies kann beispielsweise mittels Drähten realisiert sein.

Natürlich kann für die beiden Ultraschallwandler 5 und 6 auch ein gemeinsamer Bezugsleiter vorgesehen sein, sodass insgesamt drei elektrische Leitungen benötigt werden, nämlich der gemeinsame Ground Bezugsleiter sowie eine Leitung für jeden Ultraschallwandler 5 bzw. 6

Auch die Signalverbindung U3 zwischen der Speichereinheit 511 in der Einmalvorrichtung 510 und dem Speicherinterface kann in sinngemäss gleicher Weise ausgestaltet sein.

Fig. 25 zeigt in einer zu Fig. 24 analogen Darstellung eine weitere mögliche Ausführungsform für die Signalverbindungen U1, U2, welche eine elektrische Verbindung zwischen der Einmalvorrichtung 510 und der wiederverwendbaren Vorrichtung 520 ermöglichen. Bei dieser Ausführungsform ist anstelle der elektrischen Kontakte 721 in der Einmalvorrichtung ein PCB (Printed Circuit Board) 725 vorgesehen, der vorzugsweise als flexibler PCB ausgestaltet ist und in dem Hohlraum 70 angeordnet ist. In anderen Ausführungsformen können natürlich auch mehrere PCBs vorgesehen sein. Der PCB 725 kann beispielsweise mittels Verklebung oder mittels Press-Fit Technologie in dem Hohlraum 70 wasserdicht befestigt werden, sodass das Fluid nicht aus der Einmalvorrichtung herausgelangen kann.

Der PCB 725 weist eine Kontaktfläche 726 auf, die über einer Öffnung 727 angeordnet ist, sodass der Federkontakt 90 die Kontaktfläche 726 kontaktieren kann. Insbesondere wenn der PCB 725 als flexibler PCB ausgestaltet ist, kann der PCB 725 direkt über eine Lötverbindung mit den Ultraschallwandlern 5, 6 verbunden werden.

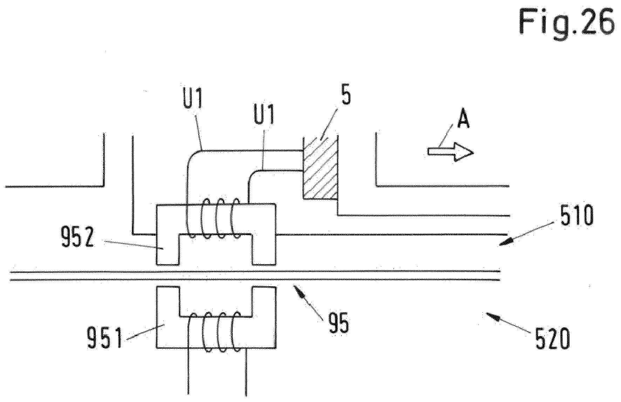

Fig. 26 zeigt in einer zu Fig. 24 analogen Darstellung eine weitere mögliche Ausführungsform für die Signalverbindungen U1, U2, welche eine elektrische Verbindung zwischen der Einmalvorrichtung 510 und der wiederverwendbaren Vorrichtung 520 ermöglichen. Bei dieser Ausführungsform ist kein direkter elektrischer Kontakt zwischen der Einmalvorrichtung 510 und der wiederverwendbaren Vorrichtung 520 vorgesehen, sondern eine induktive Kopplung. Dazu ist ein geteilter elektrischer Transformator 95 vorgesehen, dessen eine Seite 951 in der wiederverwendbaren Vorrichtung angeordnet ist, und dessen andere Seite 952 in der Einmalvorrichtung 510 angeordnet ist.

Bei denjenigen Ausführungsformen, bei denen in der Einmalvorrichtung 510 der PCB 725 vorgesehen ist, kann die Speichereinheit 511 in dem PCB 725 integriert sein, beispielsweise als Festkörperspeicher oder Mikrokontroller. Neben den Kalibrierungsdaten oder Konfigurationsparametern der Einmalvorrichtung 510 können dort auch weitere Parameter, beispielsweise die Betriebsdauer oder auch andere Informationen, insbesondere solche Informationen, die spezifisch für die jeweilige Einmalvorrichtung 510 sind, gespeichert werden. Ferner können auch einfache oder intelligente Fehlererkennungs- und Korrekturmittel in der Speichereinheit 511 integriert sein.

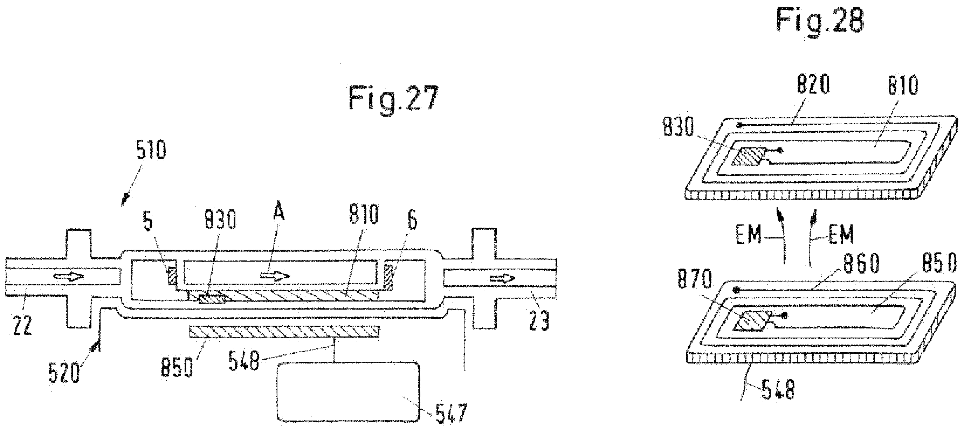

Die Kommunikation zwischen der Speichereinheit 511 der Einmalvorrichtung 510 und dem Speicherinterface 547 der wiederverwendbaren Vorrichtung 520 kann auch mittels RFID Technologie erfolgen (RFID: Radio Frequency Identification). Eine solche Ausgestaltung ist in Fig. 27 dargestellt. Zum besseren Verständnis zeigt Fig. 28 noch die beiden Komponenten für die Radiofrequenz Identifikation.

In der Einmalvorrichtung 510 ist ein erster Antennenträger 810 vorgesehen, der eine erste Antenne 820 trägt, welche mit einem passiven Transponder 830 verbunden ist, welcher auf dem ersten Antennenträger 810 angeordnet ist.

In der wiederverwendbaren Vorrichtung 520 ist ein zweiter Antennenträger 850 vorgesehen, der eine zweite Antenne 860 trägt, welche mit einem aktiven Transceiver 870 verbunden ist, welcher auf dem zweiten Antennenträger 850 angeordnet ist. Der aktive Transceiver 870 ist mit dem Speicherinterface 547 signalverbunden.

Der passive Transponder 830 und der aktive Transceiver 870 kommunizieren in an sich bekannter Weise über elektromagnetische Felder EM miteinander.

Der passive Transponder 830 und der aktive Transponder 870 sind jeweils so angeordnet, dass sie im zusammengesetzten Zustand der Einmalvorrichtung 510 und der wiederverwendbaren Vorrichtung 520 möglichst dicht aneinander sind. Durch eine geeignete EM Feldstärke und Form der Antennen 820, 860 kann erreicht werden, dass nur der direkt benachbarte passive Transponder 830 ausgelesen wird und keine weiteren in der nahen Umgebung.

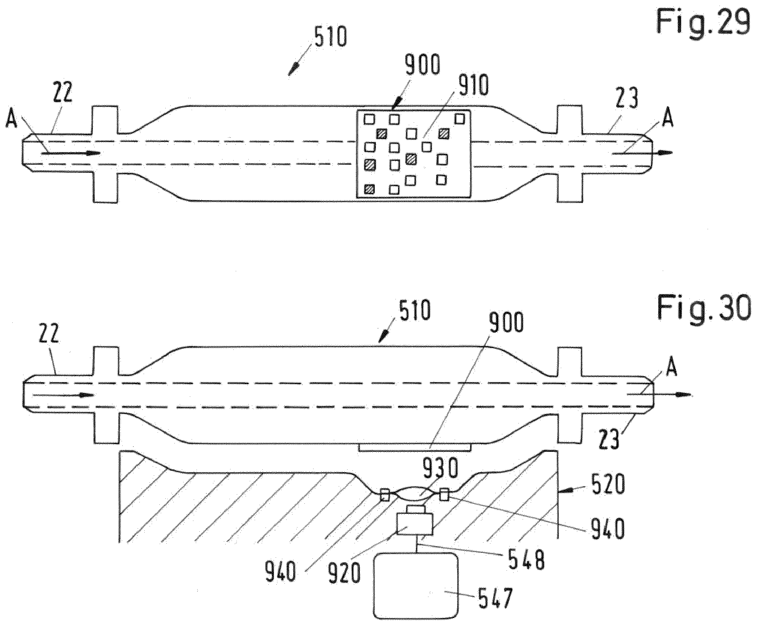

Eine weitere Möglichkeit, Konfigurationsparameter und/oder Kalibrierungsdaten einer spezifischen Einmalvorrichtung 510 an das Speicherinterface 547 der wiederverwendbaren Vorrichtung 520 zu übertragen, ist in Fig. 29 und in Fig. 30 dargestellt. Bei dieser Ausführungsform ist die Einmalvorrichtung 510 mit einer Kennzeichnung (tag) 900 versehen, welche die spezifischen Informationen 910, also beispielsweise die Kalibrierungsdaten, für diese Einmalvorrichtung 510 enthält. Die Kennzeichnung 900 ist beispielsweise als zweidimensionaler "Bar Code" ausgestaltet, z.B. als ein QR Code. Die Kennzeichnung 900 ist von aussen sichtbar auf der Einmalvorrichtung 510 angebracht, und zwar auf derjenigen Seite der Einmalvorrichtung 510, welche im zusammengesetzten Zustand der wiederverwendbaren Vorrichtung 520 zugewandt ist.

In der wiederverwendbaren Vorrichtung 520 ist eine Kamera 920 vorgesehen, welche die Kennzeichnung 900 erfassen kann. Das heisst, die Kennzeichnung 900 ist derart auf der Einmalvorrichtung 510 angeordnet, dass sie sich im zusammengesetzten Zustand der Einmalvorrichtung 510 und der wiederverwendbaren Vorrichtung 520 in der Sichtlinie der Kamera 920 befindet.

Die Kamera 900 ist mit dem Speicherinterface 547 signalverbunden. Optional können in der wiederverwendbaren Vorrichtung 520 eine Linse 930 und/oder mindestens eine Beleuchtungsquelle 940 vorgesehen sein, um eine zuverlässige optische Erfassung der Kennzeichnung 900 durch die Kamera 920 unter allen Bedingungen zu gewährleisten. Die Beleuchtungsquelle 940 kann insbesondere als LED ausgestaltet sein.

Es versteht sich, dass in der wiederverwendbaren Vorrichtung ausser dem Temperatursensor auch noch weitere Sensoren vorgesehen sein können, beispielsweise solche, mit denen Gasblasen oder Partikel in dem Fluid detektierbar sind, oder solche Sensoren, mit denen Änderungen in dem Fluid detektierbar sind, beispielsweise Farbänderungen oder Änderungen des pH-Wertes. Diese Sensoren können beispielsweise optische Sensoren sein oder elektromagnetische oder kapazitive oder magnetische Sensoren.

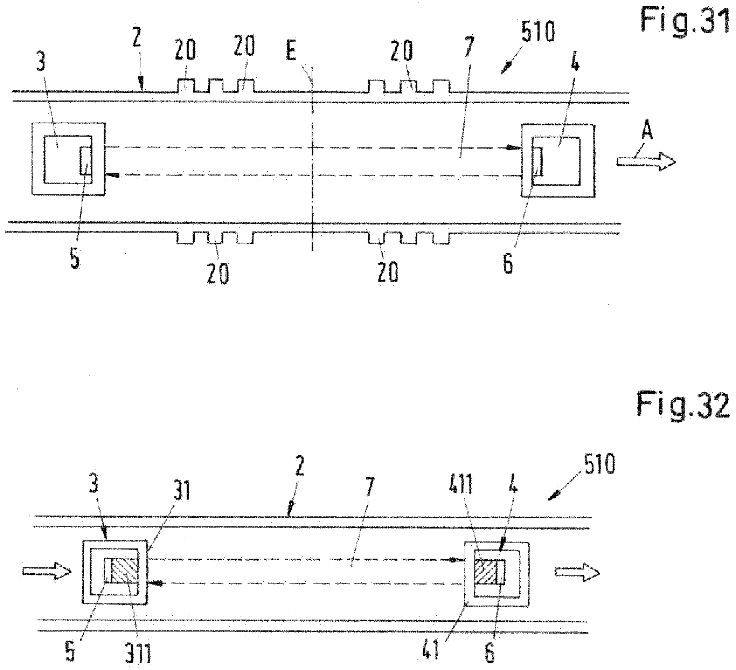

Eine weitere vorteilhafte Massnahme für die Ausgestaltung der Einmalvorrichtung 510 ist in Fig. 31 dargestellt. In der Wandung der Messröhre 2 sind entlang der Messstrecke 7 mehrere Aussparungen 20 vorgesehen, welche Reflexionen der Ultraschallsignale einfangen, sodass diese Reflexionen nicht mehr in die Messstrecke 7 zurückkehren können oder diese Reflexionen zumindest stark gedämpft werden. Die Aussparungen 20 sind vorzugsweise derart angeordnet, dass sie eine Struktur bilden, die symmetrisch bezüglich einer Mittelebene E ist, welche senkrecht auf der Strömungsrichtung A steht und in der Mitte zwischen dem ersten Ultraschallwandler 5 und dem zweiten Ultraschallwandler 6 liegt.

Noch eine weitere vorteilhafte Massnahme für die Ausgestaltung der Einmalvorrichtung 510 ist in Fig. 32 dargestellt. Bei dieser Ausführungsform ist zwischen dem ersten Ultraschallwandler 5 und der ersten Wand 31 der ersten Kammer 3 sowie zwischen dem zweiten Ultraschallwandler 6 und der zweiten Wand 41 der zweiten Kammer 4 jeweils eine Pufferzone 311 bzw. 411 vorgesehen, um das Nahfeld der generierten Ultraschallsignale auszublenden, bzw. zu verhindern, dass das Nahfeld in die Messstrecke 7 eindringt. Im Nahfeld unmittelbar vor den Ultraschalwandlern 5 bzw. 6 herrschen chaotische Wellenverhältnisse, die zu hohen Signalverlusten führen, falls das Nahfeld in die Messstrecke 7 eindringt. Durch die Pufferzonen 311 bzw. 411 lässt es sich erreichen, dass im Wesentlichen nur das Fernfeld in die Messstrecke 7 eingebracht wird. Vorzugsweise weist jede Pufferzone 311 bzw. 411 eine Länge in Strömungsrichtung A auf, die mindestens viermal so gross ist wie die Erstreckung des jeweiligen Ultraschallwandlers 5 bzw. 6 in Strömungsrichtung A.

Alternativ zu den Pufferzonen 311 bzw. 411 ist es auch möglich, für die Ultraschallwandler 5 bzw. 6 spezielle Keramiken zu verwenden, welche nur ein vernachlässigbares Nahfeld erzeugen. Solche speziellen Keramiken umfassen beispielsweise eine Vielzahl sehr kleiner Schwingerstäbchen (vibrating whiskers), die in einer zweidimensionalen Matrix angeordnet sind.

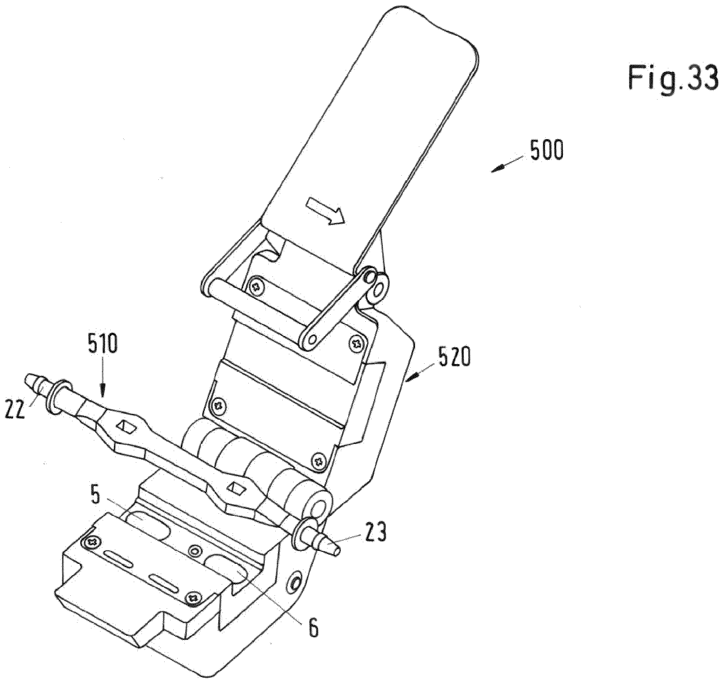

Fig. 33 zeigt in einer perspektivischen Darstellung ein zweites Ausführungsbeispiels eines erfindungsgemässen Ultraschall-Messsystems 500. Bei der folgenden Beschreibung des zweiten Ausführungsbeispiels wird nur auf die Unterschiede zu dem ersten Ausführungsbeispiel näher eingegangen. Ansonsten gelten die Erläuterungen bezüglich des ersten Ausführungsbeispiels in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel.

Der wesentliche Unterschied zu dem ersten Ausführungsbeispiel besteht darin, dass bei dem zweiten Ausführungsbeispiel der erste Ultraschallwandler 5 und der zweite Ultraschallwandler 6 Bestandteil der wiederverwendbaren Vorrichtung 520 sind, und die Einmalvorrichtung 510 keine Ultraschallwandler umfasst, wodurch die Herstellung der Einmalvorrichtung 510 kostengünstiger wird.

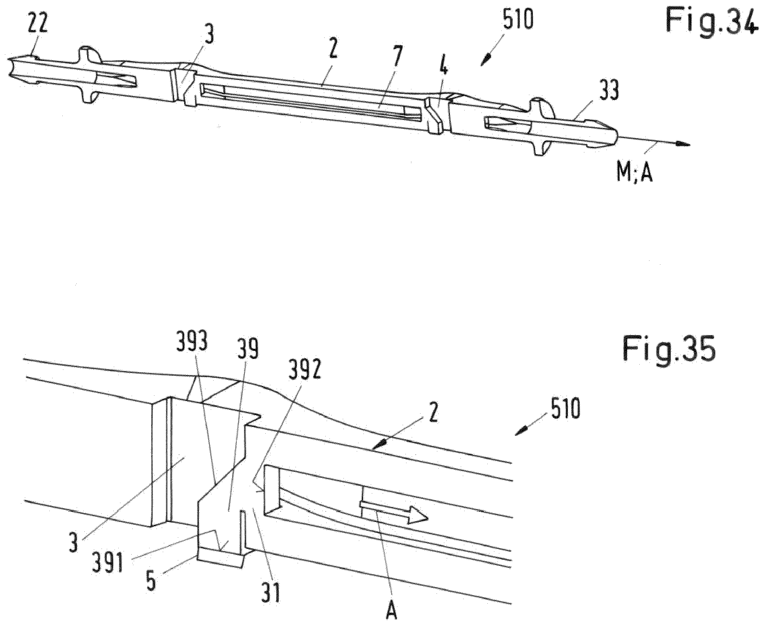

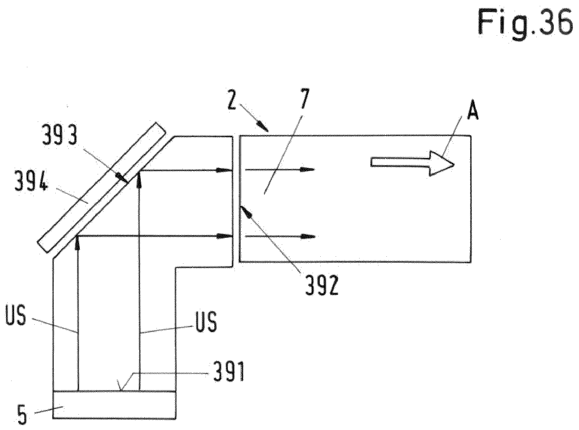

Fig. 34 zeigt eine perspektivische Schnittdarstellung der Einmalvorrichtung 510 des zweiten Ausführungsbeispiels. Zum besseren Verständnis zeigt Fig. 35 noch eine vergrösserte Darstellung eines Ausschnitts aus Fig. 34. Fig. 36 zeigt eine schematische Darstellung zur Erläuterung der Einkopplung des Ultraschallsignals in die Messstrecke 7.

Bei dem zweiten Ausführungsbeispiel sind der erste Ultraschallwandler 5 und der zweite Ultraschallwandler 6 in der Kontrolleinrichtung 540 angeordnet und zwar derart, dass sie im zusammengesetzten Zustand der Einmalvorrichtung 510 und der wiederverwendbaren Vorrichtung 520 darstellungsgemäss unterhalb der ersten Kammer 3 und unterhalb der zweiten Kammer 4 angeordnet sind.

Bei der folgenden Erläuterung wird nur auf den ersten Ultraschallwandler 5 und die erste Kammer 3 Bezug genommen. Es versteht sich, dass diese Erläuterungen analog auch für den zweiten Ultraschallwandler 6 und die zweite Kammer 4 gelten.

In der ersten Kammer 3 ist ein Wellenleitelement 39 vorgesehen, welches eine Einkoppelfläche 391 umfasst, deren Flächennormalenvektor senkrecht auf der Strömungsrichtung A steht, und welche dem ersten Ultraschallwandler 5 zugewandt ist. Das Wellenleiterelement 39 hat ferner eine Auskoppelfläche 392, deren Flächennormalenvektor in Strömungsrichtung A steht, und welche durch die erste Wand 31 der ersten Kammer 3 gebildet wird. Das Wellenleitelement 39 hat ferner eine Umlenkfläche 393, deren Flächennormalenvektor unter 45° gegen die Strömungsrichtung A geneigt ist, derart dass die durch die Einkoppelfläche 391 einlaufenden Ultraschallsignale in die Strömungsrichtung A umgelenkt bzw. reflektiert werden. Die Umlenkfläche 393 kann mit einem reflexionsverbessernden Material 394 (Fig. 36) beschichtet sein bzw. aus einem refelexionsverbessernden Material 394 bestehen. In Fig. 36 sind die Ultraschallsignale durch die Pfeile mit dem Bezugszeichen US angedeutet.

## Patentansprüche

1. Ultraschall-Messvorrichtung zur Messung an einem strömenden Fluid, mit einer Messröhre (2), welche eine Mittelachse (M) aufweist, die eine Strömungsrichtung (A) für das Fluid festlegt, mit einer ersten Kammer (3), in welcher ein erster Ultraschallwandler (5) angeordnet ist, und mit einer zweiten Kammer (4), in welcher ein zweiter Ultraschallwandler (6) angeordnet ist, wobei die Messröhre (2) einen Einlass (22) und einen Auslass (23) für das Fluid aufweist, und wobei der erste Ultraschallwandler (5) und der zweite Ultraschallwandler (6) eine geradlinige Messstrecke (7) für das Fluid begrenzen, **dadurch gekennzeichnet, dass** die erste Kammer (3) und die zweite Kammer (4) so ausgestaltet und angeordnet sind, dass sie jeweils von dem Fluid umströmbar sind, und dass der erste Ultraschallwandler (5) und der zweite Ultraschallwandler (6) so angeordnet sind, dass sich die Messstrecke (7) in der Strömungsrichtung (A) erstreckt.

2. Ultraschall-Messvorrichtung nach Anspruch 1, wobei die erste Kammer (3) und die zweite Kammer (4) in der Messröhre (2) zwischen dem Einlass (22) und dem Auslass (23) angeordnet sind.

3. Ultraschall-Messvorrichtung nach einem der vorangehenden Ansprüche, wobei der erste Ultraschallwandler (5) und der zweite Ultraschallwandler (6) auf der Mittelachse (M) der Messröhre (2) angeordnet sind.

4. Ultraschall-Messvorrichtung nach einem der vorangehenden Ansprüche, bei welcher die Messröhre (2) zwischen dem ersten Ultraschallwandler (5) und dem zweiten Ultraschallwandler (6) einen Strömungsquerschnitt für das Fluid aufweist, der kleiner ist als der Strömungsquerschnitt am Einlass (22) der Messröhre (2).

5. Ultraschall-Messvorrichtung nach einem der Ansprüche 1-3, bei welcher die Messröhre (2) zwischen dem ersten Ultraschallwandler (5) und dem zweiten Ultraschallwandler (6) einen im Wesentlichen konstanten Strömungsquerschnitt für das Fluid aufweist.

6. Ultraschall-Messvorrichtung nach einem der vorangehenden Ansprüche, wobei die erste Kammer (3) näher am Einlass (22) angeordnet ist, und die zweite Kammer (4) näher am Auslass (23) angeordnet ist, wobei die erste Kammer (3) auf ihrer dem Einlass (22) zugewandten Seite ein erstes Flussleitelement (51) zum Reduzieren von Turbulenzen aufweist, und/oder wobei die zweite Kammer (4) auf ihrer dem Auslass (23) zugewandten Seite ein zweites Flussleitelement (52) zum Reduzieren von Turbulenzen aufweist.

7. Ultraschall-Messvorrichtung nach einem der vorangehenden Ansprüche, wobei die Messstrecke (7) ein erstes Ende am ersten Ultraschallwandler (5) aufweist, sowie ein zweites Ende am zweiten Ultraschallwandler (6), und wobei an jedem Ende der Messstrecke (7) jeweils eine akustische Linse (61, 62) zum Fokussieren von Ultraschallsignalen vorgesehen ist.

8. Ultraschall-Messvorrichtung nach einem der vorangehenden Ansprüche, wobei die erste Kammer (3) und die zweite Kammer (4) in der Strömungsrichtung (A) jeweils ein im Wesentlichen tropfenförmiges Profil aufweisen.

9. Ultraschall-Messvorrichtung nach einem der vorangehenden Ansprüche, welche ferner einen Temperatursensor (8) zum Bestimmen der Temperatur des Fluids umfasst.

10. Ultraschall-Messvorrichtung nach einem der vorangehenden Ansprüche, bei welcher an der Messröhre (2) ein dritter Ultraschallwandler (9) und ein vierter Ultraschallwandler (10) vorgesehen sind, wobei sich der dritte (9) und der vierte Ultraschallwandler (10) gegenüberliegen und jeweils zum Aussenden eines Ultraschallsignals senkrecht zur Strömungsrichtung (A) angeordnet und ausgerichtet sind.

11. Ultraschall-Messvorrichtung nach einem der vorangehenden Ansprüche, welche als Einmalteil für den Einmalgebrauch ausgestaltet ist.

12. Ultraschall-Messsystem zur Messung an einem strömenden Fluid, mit einer Einmalvorrichtung (510), die für den Einmalgebrauch ausgestaltet ist, mit einer wiederverwendbaren Vorrichtung (520), die für den Mehrfachgebrauch ausgestaltet ist, mit einem ersten Ultraschallwandler (5), sowie mit einem zweiten Ultraschallwandler (6),
wobei die Einmalvorrichtung (510) eine Messröhre (2), eine erste Kammer (3) und eine zweite Kammer (4) umfasst, wobei die Messröhre (2) eine Mittelachse (M) aufweist, die eine Strömungsrichtung (A) für das Fluid festlegt, wobei die erste Kammer (3) für das Aussenden eines Signals des ersten Ultraschallwandlers (5) ausgestaltet ist, wobei die zweite Kammer (4) für das Aussenden eines Signals des zweiten Ultraschallwandlers (6) ausgestaltet ist, wobei die Messröhre (2) ferner einen Einlass (22) und einen Auslass (23) für das Fluid aufweist, wobei die erste Kammer (3) und die zweite Kammer (4) eine geradlinige Messstrecke (7) für das Fluid begrenzen, welche sich von der ersten Kammer (3) bis zu der zweiten Kammer (4) erstreckt, wobei die erste Kammer (3) und die zweite Kammer (4) so ausgestaltet und angeordnet sind, dass sie jeweils von dem Fluid umströmbar sind, und dass sich die Messstrecke (7) in der Strömungsrichtung (A) erstreckt,
wobei die wiederverwendbare Vorrichtung (520) eine Kontrolleinrichtung (540) umfasst,
welche zum Ansteuern der Ultraschallwandler (5, 6) und zum Empfangen von Signalen von den Ultraschallwandlern (5, 6) ausgestaltet ist,
nd wobei die wiederverwendbare Vorrichtung (520) lösbar mit der Einmalvorrichtung (510) verbindbar ist, sodass die wiederverwendbare Vorrichtung (520) und die Einmalvorrichtung (510) relativ zueinander fixiert sind.

13. Ultraschall-Messsystem nach Anspruch12, wobei die Einmalvorrichtung (510) und die wiederverwendbare Vorrichtung (520) mittels einer Klemmverbindung miteinander verbindbar sind.

14. Ultraschall-Messsystem nach einem der Ansprüche 12-13, wobei der erste Ultraschallwandler (5) und der zweite Ultraschallwandler (6) Bestandteil der Einmalvorrichtung (510) oder der wiederverwendbaren Vorrichtung (520) sind.

15. Einmalvorrichtung für ein Ultraschall-Messsystem, das gemäss einem der Ansprüche 12-14 ausgestaltet ist.
